(19) Europäisches Patentamt / European Patent Office / Office européen des brevets

(11) **EP 4 242 938 A1**

(12) **EUROPEAN PATENT APPLICATION**
published in accordance with Art. 153(4) EPC

(43) Date of publication:
**13.09.2023 Bulletin 2023/37**

(21) Application number: **21889612.4**

(22) Date of filing: **05.11.2021**

(51) International Patent Classification (IPC):
*G06N 20/00* (2019.01)      *H04W 4/40* (2018.01)
*H04W 4/02* (2018.01)      *H04L 9/40* (2022.01)

(52) Cooperative Patent Classification (CPC):
**G06N 20/00; H04L 63/00; H04W 4/02; H04W 4/40**

(86) International application number:
**PCT/KR2021/016029**

(87) International publication number:
**WO 2022/098147 (12.05.2022 Gazette 2022/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 05.11.2020   KR 20200146925
05.11.2020   KR 20200146977

(71) Applicant: **LG Electronics Inc.**
**Yeongdeungpo-gu**
**Seoul 07336 (KR)**

(72) Inventors:
• **HWANG, Jaeho**
**Seoul 06772 (KR)**
• **KIM, Hakseong**
**Seoul 06772 (KR)**
• **SEO, Hanbyul**
**Seoul 06772 (KR)**

(74) Representative: **Frenkel, Matthias Alexander et al**
**Wuesthoff & Wuesthoff**
**Patentanwälte PartG mbB**
**Schweigerstraße 2**
**81541 München (DE)**

(54) **METHOD FOR PROCESSING IMAGE ON BASIS OF V2X MESSAGE IN WIRELESS COMMUNICATION SYSTEM AND APPARATUS THEREFOR**

(57)      Disclosed are a method for processing an image on the basis of a received V2X message by a trained first device and an apparatus therefor according to various embodiments. Disclosed are a method and an apparatus therefor, the method comprising the steps of acquiring a first image with respect to a specific area; receiving a first V2X message related to the specific area; and matching an object corresponding to a second device having transmitted the first V2X message in the first image on the basis of the first V2X message, wherein the first V2X message includes additional information on the characteristics of the second device, the additional information being usable for matching of the second device in the first image.

FIG. 11

**Description**

**TECHNICAL FIELD**

The present disclosure relates to an image processing method for a first device configured to learn to identify objects on a first image based on received vehicle-to-everything (V2X) messages in a wireless communication system and apparatus therefor.

**BACKGROUND**

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between terminals without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PCS interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

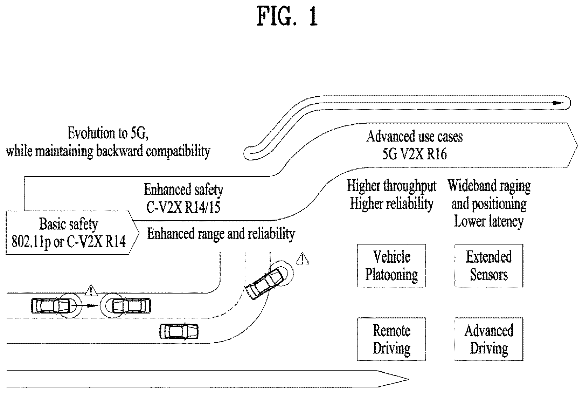

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

## DISCLOSURE

## TECHNICAL PROBLEM

The object of the present disclosure is to provide a method and apparatus for improving the performance and accuracy of image processing for a first image by specifying an object matching a second device among objects in the first image that is obtained from a vehicle-to-everything (V2X) message including additional information on the feature of the second device.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

## TECHNICAL SOLUTION

In an aspect of the present disclosure, there is provided a method of performing, by a first device configured to learn, image processing based on received vehicle-to-everything (V2X) messages in a wireless communication system. The method may include: obtaining a first image of a specific area; receiving a first V2X message related to the specific area; and matching an object corresponding to a second device on the first image based on the first V2X message, wherein the first V2X message is transmitted by the second device. The first V2X message may include additional information on a feature of the second device for matching the second device on the first image.

Alternatively, the additional information may include information on at least one of a shape, a color, a material, a movement pattern, a driving mode, or an attachment of the second device. The additional information may be included in AISupportContainer of the first V2X message.

Alternatively, the additional information may include two-dimensional (2D) preprocessing image information for indicating at least one of a shape, a color, a material, a movement pattern, a driving mode, or an attachment of the second device.

Alternatively, the first device may be configured to: specify the object matching the second device among a plurality of objects identified in the first image based on the additional information; and calculate a correction value for correcting a position of the second device based on a position of the specified object and the position of the second device included in the first V2X message.

Alternatively, the first device may be configured to transmit a message including the correction value to the second device.

Alternatively, based on that there is difference between a feature of the specified object and the feature of the second device in the additional information, the first device may be configured to transmit a message for updating the additional information to the second device.

Alternatively, the method may further include receiving a second V2X message including label information for supervised learning.

Alternatively, the first device may be configured to learn based on a second image related to a third device transmitting the second V2X message and the label information.

Alternatively, the label information may provide information on a type of the third device.

Alternatively, only when the first device transmits a label request message, the second V2X message may include the label information.

Alternatively, the first V2X message may be any one of a cooperative awareness message (CAM), a vulnerable road user awareness message (VAM), a collective perception message (CPM), a basic safety message (BSM), and a pedestrian safety message (PSM).

In another aspect of the present disclosure, there is provided a method of transmitting, by a second device, a first message including additional information in a wireless communication system. The method may include: transmitting the first message including the additional information related to image processing to a first device; and receiving a second message including matching information based on the image processing from the first device. The additional information may include information on a shape of the second device for matching the second device on a first image obtained by the first device, and the matching information may include a correction value for correcting a position of the second device.

In another aspect of the present disclosure, there is provided a first device configured to learn and perform image processing based on received V2X messages in a wireless communication system. The first device may include: a radio frequency (RF) transceiver; and a processor connected to the RF transceiver. The processor is configured to: obtain a first image of a specific area; control the RF transceiver to receive a first V2X message related to the specific area; and match an object corresponding to a second device on the first image based on the first V2X message, wherein the first V2X message is transmitted by the second device. The first V2X message may include additional information on a feature of the second device for matching the second device on the first image.

In another aspect of the present disclosure, there is provided a second device configured to transmit a first message including additional information in a wireless communication system. The second device may include: an RF transceiver; and a processor connected to the RF transceiver. The processor may be configured to control the RF transceiver to: transmit the first message including the additional information related to image processing to a first device; and receive a second message including matching information based on the image processing from the first device. The additional information may include information on a feature of the second device for matching the second device on a first image obtained by the first device, and the matching information may include a correction value for correcting a position of the second device.

In another aspect of the present disclosure, there is provided a chipset configured to learn and perform image processing based on received V2X messages in a wireless communication system. The chipset may include: at least one processor; and at least one memory operably connected to the at least one processor and configured to, when executed, cause the at least one processor to perform operations. The operations may include: obtaining a first image of a specific area; receiving a first V2X message related to the specific area; and matching an object corresponding to a second device on the first image based on the first V2X message, wherein the first V2X message is transmitted by the second device. The first V2X message may include additional information on a feature of the second device for matching the second device on the first image.

In a further aspect of the present disclosure, there is provided a computer-readable storage medium including at least one computer program configured to perform image processing based on received V2X messages in a wireless communication system. The at least one computer program may be configured to cause at least one processor to perform operations for the image processing, and the at least one computer program may be stored on the computer-readable storage medium. The operations may include: obtaining a first image of a specific area; receiving a first V2X message related to the specific area; and matching an object corresponding to a second device on the first image based on the first V2X message, wherein the first V2X message is transmitted by the second device. The first V2X message may include additional information on a feature of the second device for matching the second device on the first image.

## ADVANTAGEOUS EFFECTS

According to various embodiments, it is possible to improve the performance and accuracy of image processing for a first image by specifying an object matching a second device among objects in the first image that is obtained from a vehicle-to-everything (V2X) message including additional information on the feature of the second device.

Additionally, the additional information may be updated based on the specified object, or the location of the second device may be accurately corrected based on the specified object.

Effects to be achieved by embodiment(s) are not limited to what has been particularly described hereinabove and other effects not mentioned herein will be more clearly understood by persons skilled in the art to which embodiment(s) pertain from the following detailed description.

## BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.

FIG. 1 is a diagram for explaining by comparing V2X communication based on RAT before NR and V2X communication based on NR.
FIG. 2 illustrates the structure of an LTE system to which embodiment(s) are applicable.
FIG. 3 illustrates the structure of an NR system to which embodiment(s) are applicable.
FIG. 4 illustrates the structure of an NR radio frame to which embodiment(s) are applicable.
FIG. 5 illustrates the slot structure of an NR frame to which embodiment(s) are applicable.
FIG. 6 illustrates a radio protocol architecture for SL communication.
FIG. 7 illustrates UEs performing V2X or SL communication.
FIG. 8 illustrates resource units for V2X or SL communication.

FIG. 9 is a diagram for explaining an ITS station reference architecture.

FIG. 10 illustrates an exemplary structure of an ITS station that may be designed and applied based on a reference architecture.

FIGS. 11 and 12 are diagrams illustrating operations of an RSU including an image device such as a camera.

FIG. 13 is a diagram of a first device that learns based on learning assistance information added to V2X.

FIG. 14 is a diagram for configuring the architectures of V2X and soft V2X messages including additional information and/or label information.

FIGS. 15, 16 and 17 are diagrams for explaining DF_StationShape included in a V2X or soft V2X message.

FIGS. 18 and 19 are diagrams for explaining a method of generating and managing additional information based on cooperation between a VRU and an RSU.

FIGS. 20 and 21 are diagrams for explaining a method of generating and managing additional information between a VRU and a vehicle through a soft V2X server.

FIGS. 22 to 25 are diagrams for explaining methods for an RSU to learn based on V2X messages according to various system architectures.

FIG. 26 is a diagram for explaining a method of matching position information on a V2X device included in a V2X message and an object in an image obtained by a camera.

FIG. 27 is a diagram for explaining a method by which a first device configured to learn performs image processing based on a first V2X message.

FIG. 28 is a diagram for explaining a method by which a second device transmits a first V2X message for assisting image processing.

FIG. 29 illustrates a communication system applied to the present disclosure.

FIG. 30 illustrates wireless devices applicable to the present disclosure.

FIG. 31 illustrates another example of a wireless device to which the present disclosure is applied.

FIG. 32 illustrates a vehicle or an autonomous driving vehicle applied to the present disclosure.

## DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto

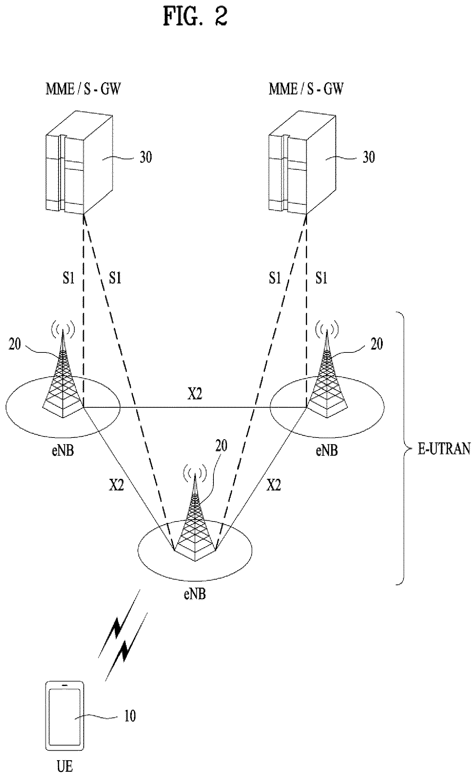

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S 1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

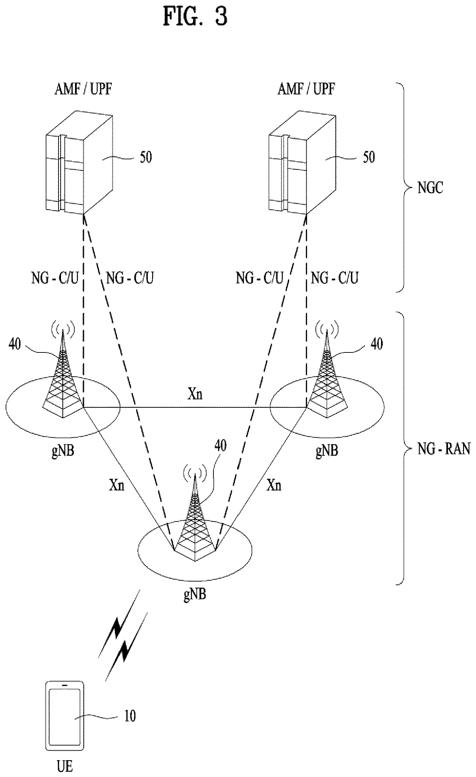

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

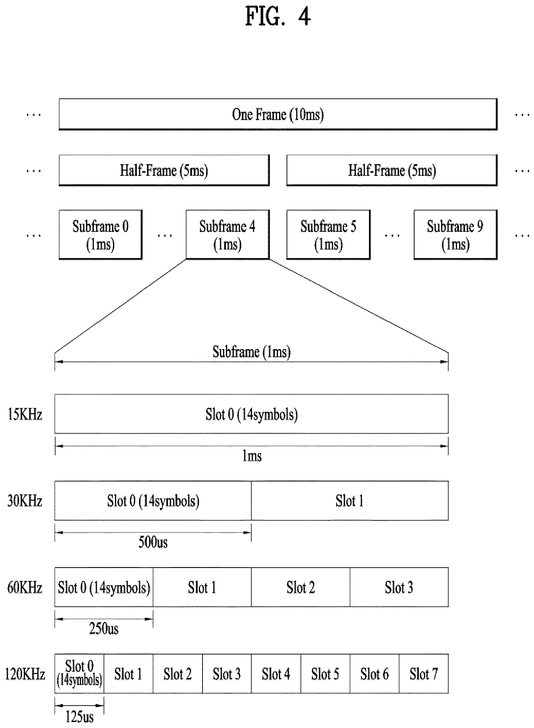

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS (15*2u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

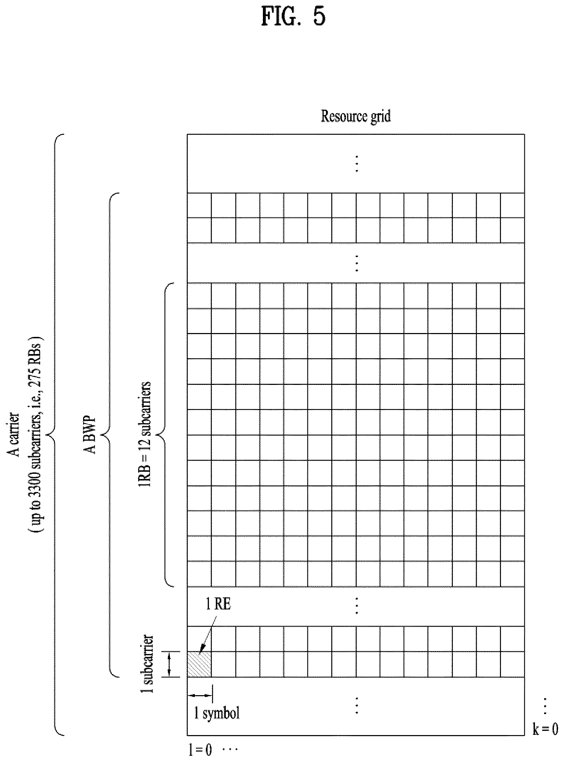

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

Hereinafter, V2X or sidelink (SL) communication will be described.

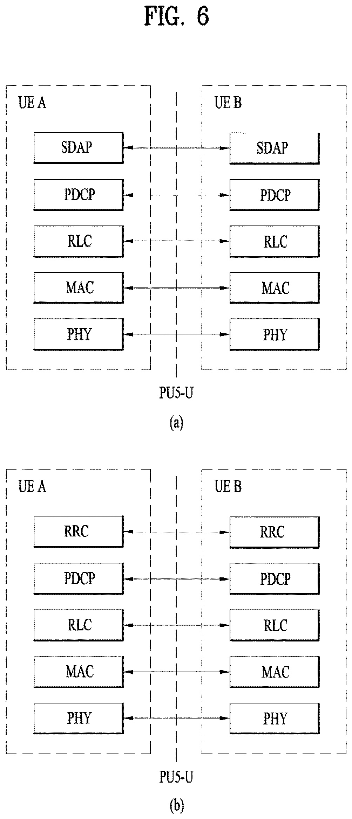

FIG. 6 illustrates a radio protocol architecture for SL communication. Specifically, FIG. 6-(a) shows a user plane protocol stack of NR, and FIG. 6-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

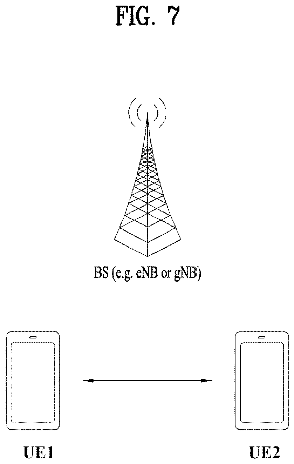

FIG. 7 illustrates UEs performing V2X or SL communication.

Referring to FIG. 7, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

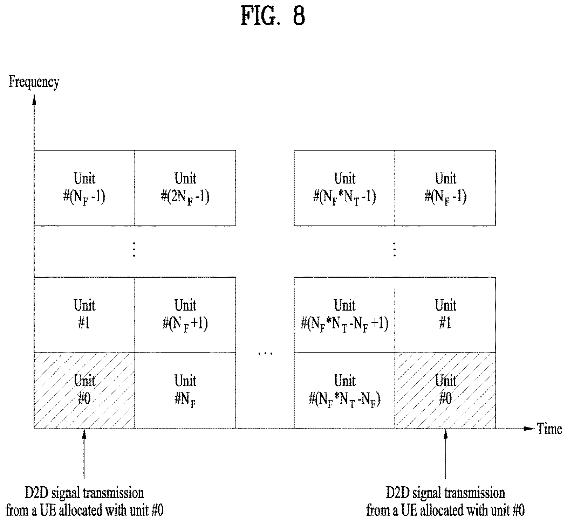

FIG. 8 illustrates resource units for V2X or SL communication.

Referring to FIG. 8, the frequency resources of a resource pool may be divided into NF sets, and the time resources of the resource pool may be divided into NT sets. Accordingly, a total of NF * NT resource units may be defined in the resource pool. FIG. 8 shows an exemplary case where the resource pool is repeated with a periodicity of NT subframes.

As shown in FIG. 8, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.

(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.

(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.

(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

## Vehicular Communications for ITS

An intelligent transport system (ITS) utilizing vehicle-to-everything (V2X) may mainly include an access layer, a network & transport layer, a facilities layer, an application layer, security and management entities, etc. Vehicle communication may be applied to various scenarios such as vehicle-to-vehicle communication (V2V), vehicle-to-network communication (V2N or N2V), vehicle-to-road side unit (RSU) communication (V2I or I2V), RSU-to-RSU communication (I2I), vehicle-to-pedestrian communication (V2P or P2V), and RSU-to-pedestrian communication (I2P or P2I). A vehicle, a BS, an RSU, a pedestrian, etc. as the subjects of vehicle communication are referred to as intelligent transport system (ITS) stations.

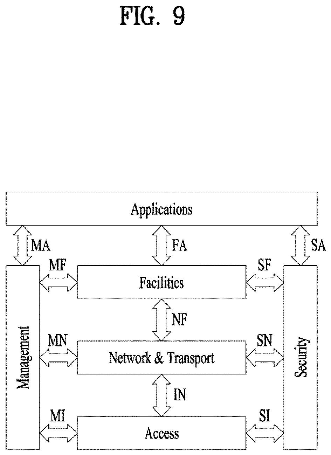

FIG. 9 is a diagram for explaining an ITS station reference architecture.

The ITS station reference architecture may include an access layer, a network & transport layer, a facilities layer, entities for security and management, and an application layer at the top. Basically, the ITS station reference architecture follows a layered OSI model.

Specifically, features of the ITS station reference architecture based on the OSI model are illustrated in FIG. 9. The access layer of the ITS station corresponds to OSI layer 1 (physical layer) and layer 2 (data link layer), the network & transport layer of the ITS station corresponds to OSI layer 3 (network layer) and layer 4 (transport layer), and the facilities layer of the ITS station corresponds to OSI layer 5 (session layer), layer 6 (presentation layer), and layer 7 (application layer).

The application layer, which is located at the highest layer of the ITS station, may actually implement and support a use-case and may be selectively used according to the use-case. The management entity serves to manage all layers in addition to managing communication and operations of the ITS station. The security entity provides security services for all layers. Each layer of the ITS station exchanges data transmitted or received through vehicle communication and additional information for various purposes through an interface. The abbreviations of various interfaces are described below.

> MA: Interface between management entity and application layer
> MF: Interface between management entity and facilities layer
> MN: Interface between management entity and networking & transport layer
> MI: Interface between management entity and access layer
> FA: Interface between facilities layer and ITS-S applications
> NF: Interface between networking & transport layer and facilities layer
> IN: Interface between access layer and networking & transport layer
> SA: Interface between security entity and ITS-S applications
> SF: Interface between security entity and facilities layer
> SN: Interface between security entity and networking & transport layer
> SI: Interface between security entity and access layer

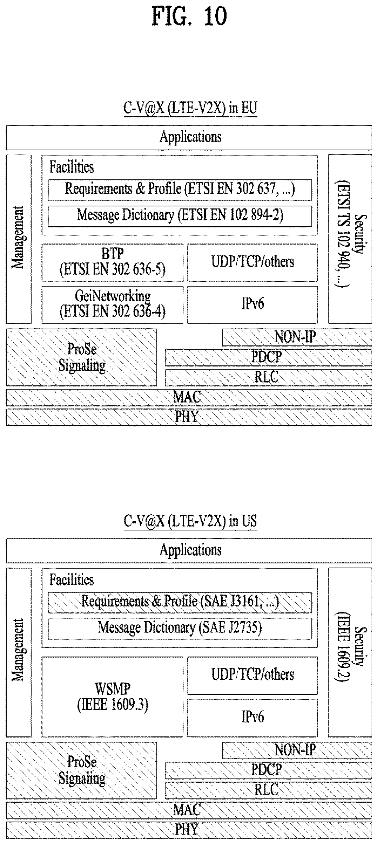

FIG. 10 illustrates an exemplary structure of an ITS station that may be designed and applied based on a reference architecture.

A main concept of the ITS station reference architecture is to allow each layer with a special function to process communication on a layer basis, between two end vehicles/users included in a communication network. That is, when a V2V message is generated, the data is passed through each layer downwards layer by layer in the vehicle and the ITS system (or other ITS-related UEs/systems), and a vehicle or ITS system (or other ITS-related UEs/systems) receiving the message passes the message upwards layer by layer.

The ITS system operating through vehicle communication and the network was organically designed in consideration of various access technologies, network protocols, communication interfaces, etc. to support various use-cases, and the roles and functions of each layer described below may be changed depending on a situation. The main functions of each layer will be briefly described.

The application later actually implements and supports various use-cases. For example, the application layer provides security, efficient traffic information, and other entertainment information.

The application layer controls an ITS station to which an application belongs in various manners or provides services by transferring a service message to an end vehicle/user/infrastructure through the access layer, the network & transport layer, and the facilities layer, which are lower layers of the application layer, by vehicle communication. In this case, the ITS application may support various use-cases. In general, these use-cases may be supported by grouping into other applications such as road-safety, traffic efficiency, local services, and infotainment. Application classification, use-cases, etc. may be updated when a new application scenario is defined. Layer management serves to manage and service information related to operation and security of the application layer, and the related information is transmitted and shared bidirectionally through an MA and an SA (or service access point (SAP), e.g., MA-SAP or SA-SAP). A request from the application layer to the facilities layer or a service message and related information from the facilities layer to the application layer may be delivered through an FA.

The facilities layer serves to support effective implementation of various use-cases defined in an application layer of a higher layer. For example, the facilities layer may perform application support, information support, and session/communication support.

The facilities layer basically supports the 3 higher layers of the OSI model, for example, a session layer, a presentation layer, and the application layer, and functions. Specifically, the facilities layer provides facilities such as application support, information support, and session/communication support, for the ITS. Here, the facilities mean components that provide functionality, information, and data.

The application support facilities support the operation of ITS applications (mainly generation of a message for the ITS, transmission and reception of the message to and from a lower layer, and management of the message). The application support facilities include a cooperative awareness (CA) basic service and a decentralized environmental notification (DEN) basic service. In the future, facilities entities for new services such as cooperative adaptive cruise control (CACC), platooning, a vulnerable roadside user (VRU), and a collective perception service (CPS), and related messages may be additionally defined.

The information support facilities provide common data information or a database to be used by various ITS applications and includes a local dynamic map (LDM).

The session/communication support facilities provide services for communications and session management and include an addressing mode and session support.

Facilities may be divided into common facilities and domain facilities.

The common facilities are facilities that provide common services or functions required for various ITS applications and ITS station operations, such as time management, position management, and service management.

The domain facilities are facilities that provide special services or functions required only for some (one or more) ITS applications, such as a DEN basic service for road hazard warning applications (RHW). The domain facilities are optional functions and are not used unless supported by the ITS station.

Layer management serves to manage and service information related to the operation and security of the facilities layer, and the related information is transmitted and shared bidirectionally through an MF and an SF (or MF-SAP and SF-SAP). The transfer of service messages and related information from the application layer to the facilities layer or from the facilities layer to the application layer is performed through an FA (or FA-SAP), and bidirectional service messages and related information between the facilities layer and the lower networking & transport layer are transmitted by an NF (or NF-SAP).

The network & transport layer servers to configure a network for vehicle communication between homogenous or heterogeneous networks through support of various transport protocols and network protocols. For example, the network & transport layer may provide Internet access, routing, and vehicle networking using Internet protocols such as TCP/UDP+IPv6 and form a vehicle network using a basic transport protocol (BTP) and GeoNetworking-based protocols. In this case, networking using geographic position information may also be supported. A vehicle network layer may be designed or configured depending on technology used for the access layer (access layer technology-independently) or regardless of the technology used for the access layer (access layer technology-independently or access layer technology agnostically).

Functionalities of the European ITS network & transport layer are as follows. Basically, functionalities of the ITS network & transport layer are similar to or identical to those of OSI layer 3 (network layer) and layer 4 (transport layer) and have the following characteristics.

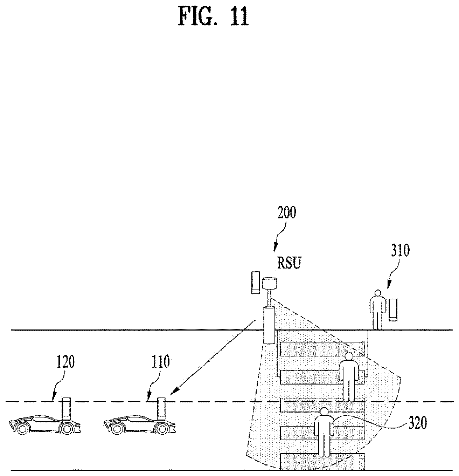

The transport layer is a connection layer that delivers service messages and related information received from higher layers (the session layer, the presentation layer, and the application layer) and lower layers (the network layer, the data link layer, and the physical layer). The transport layer serves to manage data transmitted by an application of the ITS station so that the data accurately arrives at an application process of the ITS station as a destination. Transport protocols that may be considered in European ITS include, for example, TCP and UDP used as legacy Internet protocols as illustrated in FIG.11, and there are transport protocols only for the ITS, such as the BTS.

The network layer serves to determine a logical address and a packet forwarding method/path and add information such as the logical address of a destination and the forwarding path/method to a header of the network layer in a packet received from the transport layer. As an example of the packet method, unicast, broadcast, and multicast between ITS stations may be considered. Various networking protocols for the ITS may be considered, such as GeoNetworking, IPv6 networking with mobility support, and IPv6 over GeoNetworking. In addition to simple packet transmission, the GeoNetworking protocol may apply various forwarding paths or transmission ranges, such as forwarding using position information about stations including vehicles or forwarding using the number of forwarding hops.

Layer management related to the network & transport layer serves to manage and provide information related to the operation and security of the network & transport layer, and the related information is transmitted and shared bidirectionally through an MN (or MN-SAP) and an SN (or SN-SAP). Transmission of bidirectional service messages and related information between the facilities layer and the networking & transport layer is performed by an NF (or NF-SAP), and service messages and related information between the networking & transport layer and the access layer are exchanged by an IN (or IN-SAP).

A North American ITS network & transport layer supports IPv6 and TCP/UDP to support existing IP data like Europe, and a wave short message protocol (WSMP) is defined as a protocol only for the ITS.

A packet structure of a wave short message (WSM) generated according to the WSMP includes a WSMP header and WSM data carrying a message. The WSMP header includes Version, PSID, WSMP header extension fields, WSM WAVE element ID, and Length.

Version is defined by a WsmpVersion field indicating an actual WSMP version of 4 bits and a reserved field of 4 bits. PSID is a provider service identifier, which is allocated according to an application in a higher layer and helps a receiver to determine an appropriate higher layer. Extension fields is a field for extending the WSMP header, and includes information such as a channel number, a data rate, and transmit power used. WSMP WAVE element ID specifies the type of a WSM to be transmitted. Length specifies the length of transmitted WSM data in octets through a WSMLength field of 12 bits, and the remaining 4 bits are reserved. LLC Header allows IP data and WSMP data to be transmitted separately and is distinguished by Ethertype of a SNAP. The structures of the LLC header and the SNAP header are defined in IEEE802.2. When IP data is transmitted, Ethertype is set to 0x86DD in the LLC header. When WSMP is transmitted, Ethertype is set to 0x88DC in the LLC header. The receiver identifies Ethertype. If Ethertype is 0x86DD, the receiver transmits upward the packet to an IP data path, and if Ethertype is 0x88DC, the receiver transmits upward the packet to a WSMP path.

The access layer serves to transmit a message or data received from a higher layer on a physical channel. As access layer technologies, ITS-G5 vehicle communication technology based on IEEE 802.11p, satellite/broadband wireless mobile communication technology, 2G/3G/4G (long-term evolution (LTE), etc.)/5G wireless cellular communication technology, cellular-V2X vehicle-dedicated communication technologies such as LTE-V2X and NR-V2X (new radio), broadband terrestrial digital broadcasting technology such as DVB-T/T2/ATSC3.0, and GPS technology may be applied.

A data link layer is a layer that converts a physical line between adjacent nodes (or between vehicles) with noise into a communication channel without transmission error, for use in the higher network layer. The data link layer performs a function of transmitting/delivering/forwarding L3 protocols, a framing function of dividing data to be transmitted into packets (or frames) as transmission units and grouping the packets, a flow control function of compensating for a speed difference between a transmitter and a receiver, and a function of (because there is a high probability that an error and noise occurs randomly in view of the nature of a physical transmission medium) detecting a transmission error and correcting the error or detecting a transmission error based on a timer and an ACK signal by a transmitter in a method such as automatic repeat request (ACK) and retransmitting a packet that has not been correctly received. In addition, to avoid confusion between packets or ACK signals, the data link layer performs a function of assigning a sequence number to the packets and the ACK signals, and a function of controlling establishment, maintenance, and disconnection of a data link between network entities, and data transmission between network entities. The main functions of logical link control (LLC), radio resource control (RRC), packet data convergence protocol (PDCP), radio link control (RLC), medium access control (MAC), and multi-channel operation (MCO) included in the data link layer of FIG. 11 will be described below.

An LLC sub-layer enables the use of different lower MAC sub-layer protocols, and thus enables communication regardless of network topology. An RRC sub-layer performs functions such as broadcasting of cell system information required for all UEs within a cell, management of delivery of paging messages, management (setup/maintenance/release) of RRC connection between a UE and an E-UTRAN, mobility management (handover), transmission of UE context between eNodeBs during handover, UE measurement reporting and control therefor, UE capability management, temporary assignment of a cell ID to a UE, security management including key management, and RRC message encryption. A PDCP sub-layer may performs functions such as IP packet header compression in a compression method such as robust header compression (ROHC), cyphering of a control message and user data, data integrity, and data loss prevention during handover. RLC sub-layer delivers a packet received from the higher PDCP layer in an allowed size of the MAC layer through packet segmentation/concatenation, increases data transmission reliability by transmission error and retransmission management, checks the order of received data, reorders data, and checks redundancy. A MAC sub-layer performs functions such as control of the occurrence of collision/contention between nodes for use of shared media among multiple nodes, matching a packet delivered from the higher layer to a physical layer frame format, assignment and identification of the address of the transmitter/receiver, detection of a carrier, collision detection, and detection of obstacles on the physical medium. An MCO sub-layer enables efficient provision of various services on a plurality of frequency channels. The main function of MCO sub-layer is to effectively distribute traffic load of a specific frequency channel to other channels to minimize collision/contention of communication information between vehicles in each frequency channel.

The physical layer is the lowest layer in the ITS layer architecture. The physical layer defines an interface between a node and a transmission medium and performs modulation, coding, and mapping of a transport channel to a physical channel, for bit transmission between data link layer entities and informs the MAC sub-layer of whether a wireless medium is busy or idle by carrier sensing or clear channel assessment (CCA).

A soft V2X system may be a system in which a soft V2X server receives a VRU message or a personal safety message (PSM) from a vulnerable road user (VRU) or a V2X vehicle and transfers information on a neighbor VRU or vehicle based on the VRU message or the PSM message or may analyze a road condition, etc. on which neighbor VRUs or vehicles move and may transmit a message informing a neighbor VRU or vehicle of a collision warning, etc. based on the analyzed information (e.g., through a downlink signal) via V2X communication using a UU interface. Here, the VRU message may be a message transmitted to the soft V2X server through the UU interface, and may include mobility information about the VRU, such as a position, a movement direction, a movement path, and a speed of the VRU. That is, the soft V2X system may use a method of receiving mobility information of VRUs and/or vehicles related to V2X communication through the UU interface and controlling a driving route or a VRU movement flow of the VRU, etc. based on the mobility information received by the softV2X server, such as a network. The soft V2X system may be configured in relation to V2N communication.

User equipment or pedestrian equipment (VRU device) that is difficult to perform direct communication (PC5, DSRC) related to V2X communication can provide or receive driving information and mobility information to nearby vehicles or VRUs through the soft V2X system based on the UU interface. Through this, the user equipment or pedestrian equipment (VRU device) that is difficult to perform the direct communication (PC5, DSRC) can be protected from surrounding vehicles.

## V2X device providing additional information to assist Soft RSU

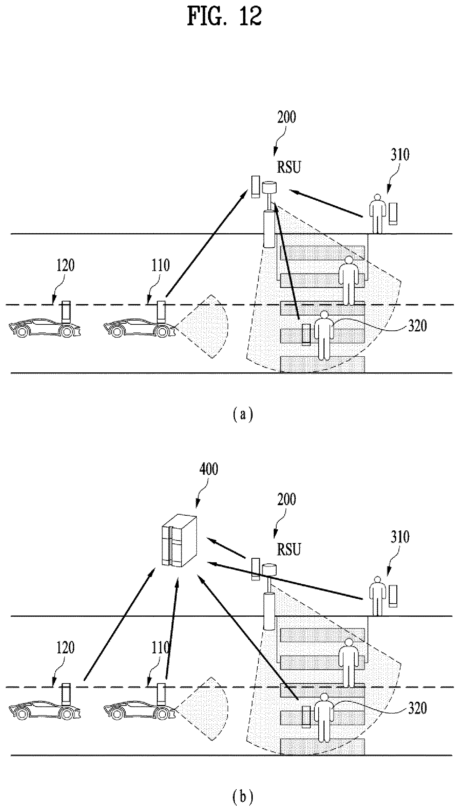

FIGS. 11 and 12 are diagrams illustrating operations of an RSU including an image device such as a camera.

Referring to FIG. 11, an RSU 200 may classify VRUs and vehicles based on an artificial intelligence (AI) image processing algorithm of the RSU 200 and then provide classification information to surrounding ITS stations in V2X messages (cooperative awareness message (CAM), vulnerable road user awareness message (VAM), collective perception message (CPM), etc.).

In this case, the V2X message may be to share information defined for safety between vehicles. That is, information necessary for safety between vehicles such as sensor data may be transmitted and shared. However, a conventional V2X message does not include information for helping an image device such as a closed-circuit television (CCTV) or a camera recognize vehicles. Thus, the RSU 200 needs to perform AI based image processing (i.e., image processing for identifying or specifying VRUs or vehicles in images) based on only information obtained from its own camera. As a result, the RSU 200 may have an error in identifying vehicles and VRUs during image processing (or may have an error in measurement). Alternatively, the RSU 200 may take considerable time for the image processing.

To improve the performance and speed of image processing of the smart RSU 200, the smart RSU 200 needs to receive additional information from vehicles and VRUs, which correspond to objects to be identified from an image. Alternatively, the smart RSU 200 needs to receive information from its camera or surrounding ITS devices (e.g., V2X devices, VRU devices) to improve the performance of the image processing based on the camera information.

Referring to FIG. 12(a), the smart RSU 200 may receive some assistance in image processing through direct communication. According to the current stand-alone technology, each of a vehicle 110 and VRUs 310 and 320 may transmit additional information for assisting the image processing of the RSU 200 in a V2X signal. That is, the RSU 200 may receive a V2X message including additional information (or assistance information) from ITS station devices located in its reception coverage.

Referring to FIG. 12(b), the smart RSU 200 may receive some assistance in image processing through a soft V2X server 400 (i.e., Uu interface). The soft V2X server 400 may collect additional information for assisting the image processing from all ITS stations 110, 120, 310, and 320 and then forward the collected additional information to RSUs in consideration of the traveling directions of all ITS stations 110, 120, 310, and 320. In this case, the RSU 200 may receive information on all ITS stations 110, 120, 310, and 320, regardless of its own coverage, and each of all ITS stations 110, 120, 310, and 320 may not need to transmit a V2X message including additional information to each RSU. Since each of the ITS stations 110, 120, 310, and 320 needs to transmit the V2X or VRU message including the additional information to the soft V2X server at least once, thereby minimizing the transfer amount of the additional information.

To support the methods described above in FIGS. 12(a) and 12(b), the RSU 200 needs to receive additional information for assisting the image processing in a V2X message. However, considering the fact that a CAM (or PSM) may carry optimal information for avoiding a collision between vehicles because the CAM (or PSM) is based on vehicle-to-vehicle communication, the CAM or PSM may not be suitable for carrying additional information for processing images acquired from the image device (e.g., camera, CCTV, etc.) of the RSU 200. In V2X communication, a V2X message may include or share information that affects only collisions between vehicles (i.e., the V2X message may not contain the color of a vehicles, the presence of a sunroof, presence of a roof box, vehicle types, etc.).

However, the RSU 200 needs to transmit and receive data (additional information) for assisting the AI image processing of the image device (camera, CCTV, etc.) through V2X communication. To this end, a new type of message may be defined for the CAM (or PSM), and methods for performing image processing based on the message type may be required. Although the image device (camera, CCTV, etc.) installed in the RSU is specified in the above examples, the present disclosure is not limited thereto. Specifically, as a device that acts as an RSU installed around roads or pedestrian roads, sensors capable of sensing vehicles or pedestrians as well as image devices (cameras, CCTVs, etc.) may be applied to the corresponding technology.

When a device configured to perform running learning is installed in an advanced driver assistance system (ADAS) vehicle or an RSU equipped with an image device (camera, CCTV, etc.) to improve the performance of an AI network, it may be considered that a V2X device transmits an additional signal for the improvement.

Hereinafter, methods of managing an RSU system with machine learning technology and operating a V2X signal for assisting the RSU system will be described first.

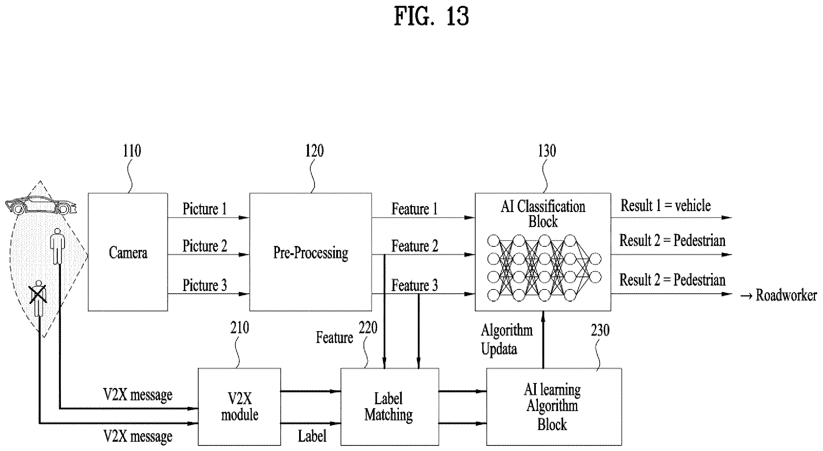

FIG. 13 is a diagram of a first device that learns based on learning assistance information added to V2X.

Each V2X device (vehicle, VRU, etc.) may additionally transmit its own label in a V2X message, and an RSU (i.e., the first device) may perform supervised learning based on images. In the supervised learning, a label may be used as correct answer information in a running learning algorithm.

Specifically, referring to FIG. 13, the RSU may include a V2X module 210, a label matching block 220, a camera 110, a preprocessing block 120, and an AI classification block 130. The AI classification block 130 may classify or extract an object from features obtained by the preprocessing block 120.

The AI classification block 130 may classify and output vehicles and pedestrians from an image obtained by the camera 110. However, it is necessary to distinguish between a normal pedestrian and a construction worker among the pedestrians. In this case, each of the VRU devices related to the pedestrians may transmit a label for distinguishing between the normal pedestrian and the construction worker (road worker) in a V2X message. The RSU may extract the position and label of an object through the V2X module 210, and the label matching block 220 may perform label matching by comparing features extracted from the camera 110. The AI learning algorithm block 230 may newly create or learn an AI network for distinguishing between the normal pedestrian and the construction worker based on matching information provided by the label matching block 220. Then, the AI learning algorithm block 230 may provide the AI network to the AI classification block 130 so that the AI network may be updated to distinguish between the normal pedestrian and the construction worker.

Hereinafter, the architectures of V2X and soft V2X messages including additional information and/or label information will be described.

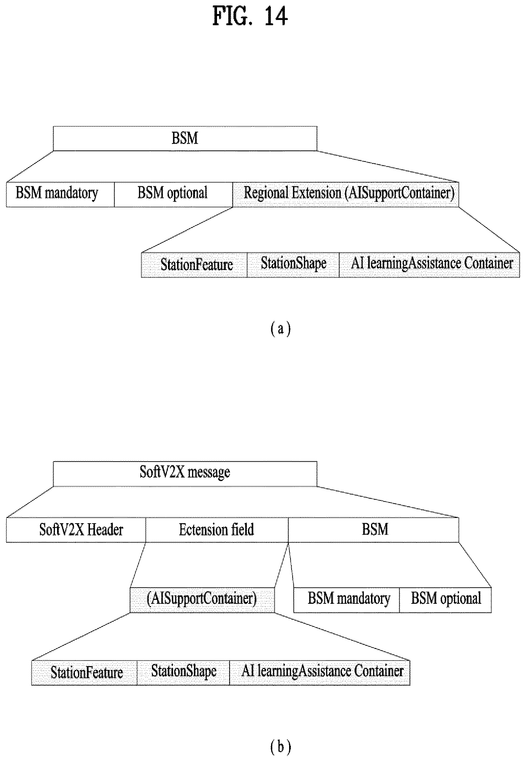

FIG. 14 is a diagram for configuring the architectures of V2X and soft V2X messages including additional information and/or label information.

Referring to FIG. 14(a), a V2X message may additionally include AISupportContainer, which is configured in an extension manner. That is, the V2X message (e.g., BSM and/or CAM) may further use AISupportContainer. Alternatively, AISupportContainer may be set as an extra extension (optional field or regional extension) or a new message. Alternatively, referring to FIG. 14(b), in the case of soft V2X, a soft V2X message related to the Uu interface may also include AISupportContainer.

AISupportContainer added to the soft V2X or V2X message may include a header, a StationFeature field containing additional vehicle information (or additional information) for assisting AI image processing, a StationShape field, and an AI LeaningAssistance Container field containing information (label information) for assisting learning.

As defined in Table 5 below, the StationFeature field may include the following subfield or sub-containers, which contain the feature and shape of a vehicle (and/or VRU): DE_StationColor representing the color of a vehicle; DE_Sunloof indicating the presence or absence of a sunroof; DE_LoofBox representing structures installed on the roof of the vehicle; and DE_bikeRack indicating whether a bike is mounted. The sub-containers may provide additional vehicle information, which may not be expressed in conventional V2X messages.

For the VRU, data messages suitable for the VRU may be used. For example, when the VRU is using an umbrella, the V2X or VRU device may continuously transmit information about the VRU, but the image device (camera, CCTV, etc.) of the RSU may obtain only an image of an umbrella shape rather than a human shape. Accordingly, in addition to the state of the VRU, the V2X message may further include information on the umbrella available for the image processing for the image device (camera, CCTV, etc.). For example, DE_Color may provide the color of the umbrella to the image device (camera, CCTV, etc.), and DE_VRUUmbrella may provide information indicating that the VRU is going with the umbrella to the image device (camera, CCTV, etc.).

[Table 5]

| ASN.1 Representation | |
|---|---|
| DF_StationFeature | ::= SEQUENCE { |
| DE_Color | INTEGER |
| DE_SunRoof | INTEGER |
| DE_RoofBox | INTEGER |
| DE_VRUumbrella | INTEGER |
| } | |

According to the above-described methods, a vehicle (or VRU device) may generate and transmit a V2X message including additional information about the shape of the vehicle (or VRU device) based on its predetermined shape (i.e., initial shape determined in manufacturing process, for example, sunroof or color). However, when the initial shape of the vehicle is changed by additional modification (e.g., painting change, structural change, etc.) in the aftermarket, the V2X device mounted in the vehicle may not generate additional information by appropriately reflecting the change caused by the additional modification (that is, the V2X device may not continuously manage the shape change caused by the additional modification).

To solve this problem, DF_StationShape may be additionally configured or included in a V2X message or soft V2X message. DF_StationShape may be updated in real time by linking the state and feature of a vehicle with an RSU. That is, DF_StationShape may be determined or configured based on information processed by an image device (camera, CCTV, etc.) included in the RSU, rather than being selected from among designated types.

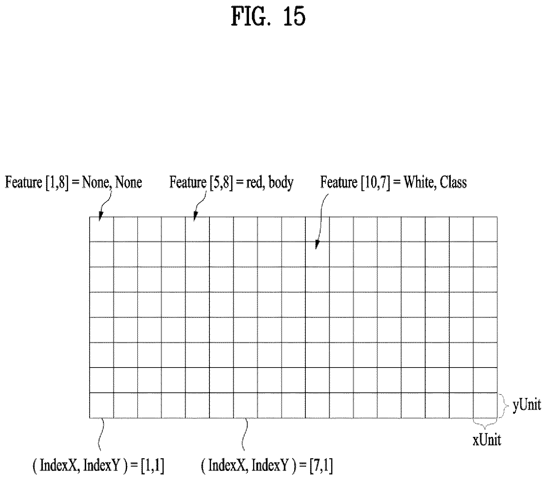

FIGS. 15, 16 and 17 are diagrams for explaining DF_StationShape included in a V2X or soft V2X message.

Referring to FIG. 15, the shape and feature of an object (vehicle or VRU) may be processed as two-dimensional (2D) preprocessing image information (e.g., video coding for machine (VCM), bitmap, etc.). That is, the shape and feature of the object (vehicle or VRU) may be processed as preprocessing image information or feature information for assisting AI-based image processing. An image processed by an image device (camera, CCTV, etc.) included in an RSU may be expressed as 2D top-view preprocessing image information (e.g., VCM, bitmap, etc.).

For example, the 2D preprocessing image information may be represented on the X and Y axes, starting at (1, 1) from the bottom left. Each pixel may be provided on a bitmap of which the size is defined by xUnit and yUnit. In addition, the color and material of a vehicle may be indicated per coordinate. To indicate the direction of the vehicle, a portion with a value of 1 on the x-axis may be set to the front portion of the vehicle.

As described above, the features of a vehicle may be represented by DF_StationShape for representing the shape and feature of an object (vehicle or VRU) with 2D preprocessing image information (e.g., VCM, bitmap, etc.). DF_StationShape may include the following fields or parameters: xUnit, yUnit, Confidence, ColorBitmap, and TextureBitmap shown in Table 6 below. Specifically, xUnit and yUnit may provide information on the unit length on the X and Y axes of a bitmap. For example, when xUnit and yUnit are set to 1 cm, if a value of 10 is provided, one interval of the bitmap may be 10 cm. Confidence may indicate the reliability/accuracy of the 2D preprocessing image information (e.g., VCM, bitmap, etc.) in percentages.

[Table 6]

| ASN.1 Representation | |
|---|---|
| DF_StationShape | ::= SEQUENCE { |
| XUnit | INTEGER |
| YUnit | INTEGER |
| Confidence | INTEGER |
| ColorBitmap | SECUENCE of INTEGER |
| TextureBitmap SEQUENCE of INTEGER | |
| AdditionalData | SEQUENCE of INTEGER |
| } | |

To represent the shape and feature of an object (vehicle or VRU), the image processing state of a camera may be provided in the form of a bitmap. However, the present disclosure is not limited thereto. That is, various types of 2D preprocessing image information may be used based on AdditionalData as long as the information is data suitable for the AI algorithm of a camera.

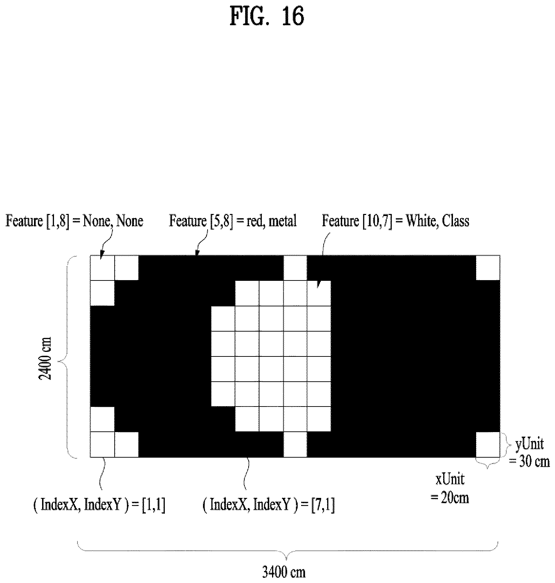

Referring to FIG. 16, when xUnit and yUnit of DF_StationShape are set to 20 cm and 30 cm, respectively, the size of a vehicle in DF_StationShape may be specified as 2400 by 3400. In addition, the color and material of the vehicle may be expressed along the coordinates of a bitmap (or various types of 2D preprocessing image information as long as the information is data suitable for the AI algorithm of a camera).

Specifically, the bitmap in DF_StationShape shown in FIG. 16 (or various types of 2D preprocessing image information as long as the information is data suitable for the AI algorithm of a camera) may be expressed as shown in Table 7 below. In addition, xUnit and yUnit may be set to 20 and 30, which represent 20 cm and 30 cm, respectively, and Confidence may be set to 90, which represents 90%. In the bitmap (or various types of 2D preprocessing image information as long as the information is data suitable for the AI algorithm of a camera), values may be sequentially configured from (1, 1).

[Table 7]

| ASN.1 Representation | |
|---|---|
| DF_StationShape | ::= SEQUENCE { |
| XUnit | 20 |
| YUnit | 30 |
| Confidence | 90 |
| ColorBitmap | 0, 0, 0, 7, 7, 7, 7, 7, 7, 7, 10, ...->- -7:Red 10: while |
| TextureBitmap | 0, 0, 0, 1, 1, 1, 1, 1, 1, 1, 2, ...->1: metal 10: glass} |

Finally, AI Leaning Assistance Container (ALAContainer), which is the field for assisting AI learning, may include a header and payload. Specifically, commonly applied or provided information may be configured for the header. In particular, the format of the payload may change based on MessageType configured in the header.

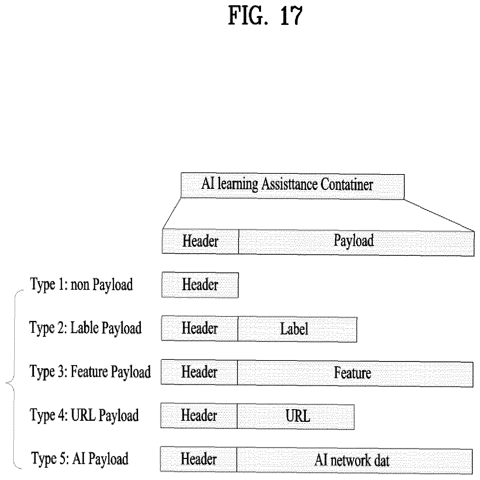

Referring to FIG. 17, when MessageType is 1, the VRU or V2X message may be a non-payload message with only the header. The non-payload message may be a signal (or message) requesting a specific signal or specific information or an ACK signal (or message). If MessageType is 2, the VRU or V2X message may be a message having a label payload format, and the payload may include label information for identifying stations. If MessageType is 3, the VRU or V2X message may be a message used in feature payload mode, and the payload may include photograph information (feature) for image processing learning. If MessageType is 4, the VRU or V2X message may be a message used in uniform resource locator (URL) payload mode, which may be used to indirectly transmit large information through a URL when it is difficult to transmit the information with the payload. If the MessageType is 5, the VRU or V2X message may be a message used in AI payload mode, and the payload may include information on an updated image processing network.

Hereinafter, a V2X message including additional information for recognizing objects in an image obtained from an image device (camera, CCTV, etc.) based on the above-described message architectures will be described in detail.

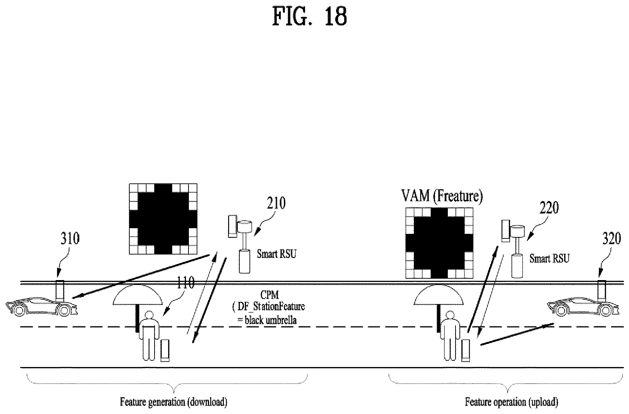

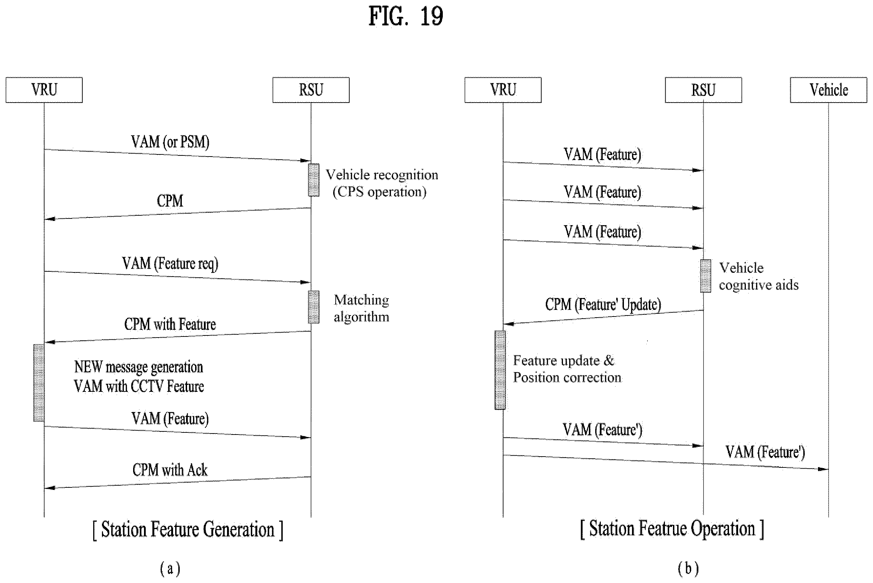

FIGS. 18 and 19 are diagrams for explaining a method of generating and managing additional information based on cooperation between a VRU and an RSU.

A station (vehicle or VRU device) may configure additional information in advance based on information on the station (information on the shape and feature thereof), which is predetermined, but the information on the station may be modified due to structural changes. To correct the information on the station based on the structural changes, a V2X communication method between the RSU including an image device (camera, CCTV, etc.) and the station (VRU device or vehicle) will be described.

A VRU device 110 of a pedestrian may have a V2X device with a function of transmitting additional information for assisting RSUs 210 and 220. The RSUs 210 and 220 equipped with cameras may be installed around the road. The VRU device 110 may transmit a V2X signal to the initial RSU 210 while the pedestrian is holding an umbrella. In this case, the initial RSU 210 may obtain an image of the shape of the pedestrian's umbrella. The initial RSU 210 may configure the value of DF_StationFeature indicating that the pedestrian is using the umbrella and the value of DF_StationShape, which is image data analyzed by the RSU 210, to the VRU device 110, based on the V2X message (including information on the position and movement direction) transmitted from the VRU device 110 and the image analyzed by the RSU 210. The initial RSU 210 may transmit information on the configured VRU feature (i.e., the feature of the pedestrian using the VRU device) to not only the VRU device 110 but also a surrounding vehicle 310. Based on the information on the configured VRU feature, the VRU device 110 and the vehicle 310 may recognize that the pedestrian corresponding to the VRU device 110 is using the umbrella.

Upon obtaining the VRU feature information (i.e., the information on the feature of the pedestrian using the VRU device 110) generated by cooperation with the RSU 210, the VRU device 110 may transmit information on its own state to surrounding RSUs and vehicles in order to indicate that the umbrella is being used. Accordingly, the above method may not only assist image processing of the next RSU 220 but also help image processing of ADAS vehicles.

Referring to FIG. 19(a), messages may be exchanged between a station (VRU device) and an RSU in a station feature generation step. Specifically, the VRU device may transmit a V2X message (VAM or PSM) to the RSU. Next, the RSU may recognize the VRU device based on image processing with a camera and then transmit a CPM based on the recognized information. Upon receiving the CPM, the VRU device may transmit a message (VAM) requesting additional information to the RSU if the VRU device requires generation of additional information on the VRU device.

When information on the VRU device obtained from the image processing matches the received V2X information, the RSU may provide some of the information acquired from the image processing to the VRU device as the additional information. The VRU device may generate a V2X message (or VAM extension message) based on the received additional information and transmit the generated V2X message (or VAM extension message) to surroundings. In addition, the RSU may additionally estimate or obtain the feature of the VRU device from images obtained in the future. The RSU may verify whether a VRU feature included in the V2X message is correct by comparing the additionally obtained feature of the VRU device with the VRU feature included in the VAM extension message.

Referring to FIG. 19(b), messages may be exchanged between a station (VRU device or vehicle) and an RSU in a station feature operation step. The station may periodically transmit a V2X message (or VAM message) based on additional information obtained in the station feature generation step. The VRU device may transmit additional information on its own appearance or movement pattern to the RSU and V2X vehicles in the V2X message (or VAM message). Upon receiving the V2X message, the RSU may improve the performance of the image processing algorithm based on the additional information included in the V2X message (or VAM message). Thereafter, the RSU may transmit a CPM including additional information on an object recognized through the image processing algorithm. The VRU device may easily match itself to the object included in the CPM and correct its position based on the matched object. Alternatively, the VRU device may update the additional information on itself based on the matched object. The use of a VAM, CPM, etc. are assumed in the above embodiment, but AISupportContainer DF proposed above may be applied to various types of messages (e.g., BSM, PSM, CAM, DENM, CPM, VAM, etc.).

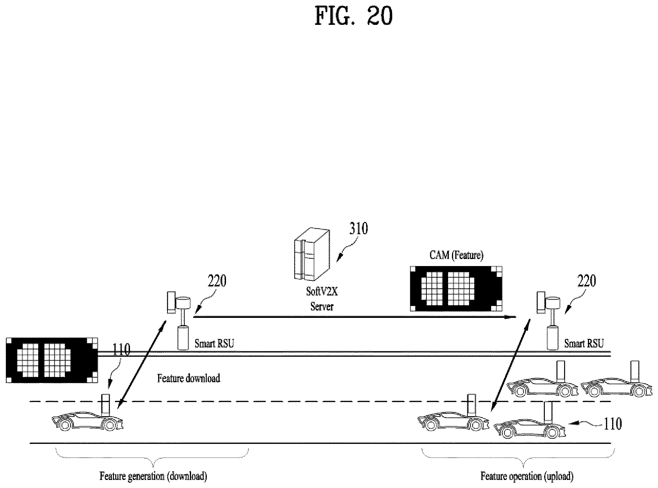

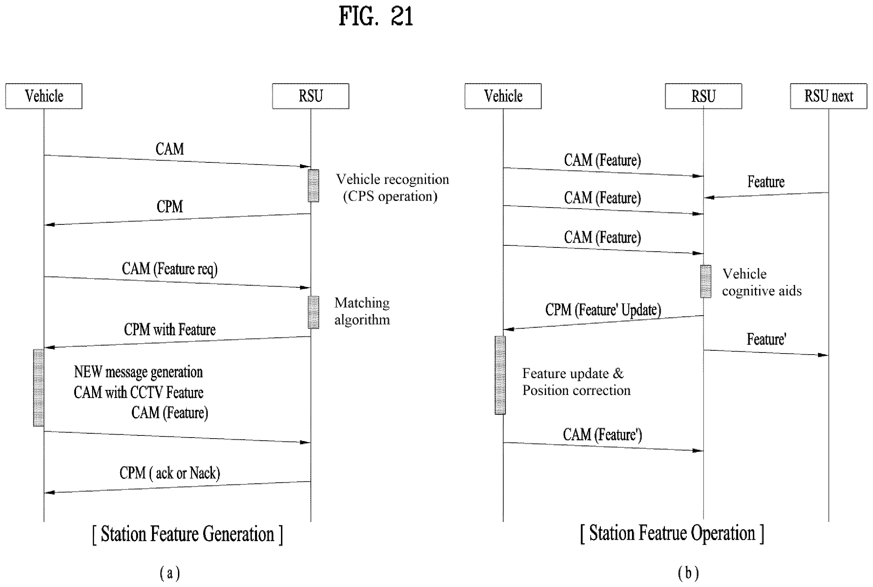

FIGS. 20 and 21 are diagrams for explaining a method of generating and managing additional information between a VRU and a vehicle through a soft V2X server.

Referring to FIG. 20, a vehicle or VRU device 110 may have a V2X device and transmit a V2X message and/or a VRU message including additional information for assistance of an image device (camera or CCTV) of an RSU through communication with a soft V2X server 310. Smart RSUs 210 and 220 may be installed around the road. First, when there are few vehicles around the smart RSU 210 to the extent that the smart RSU 210 is capable of reliably matching the vehicle 110 and an object in an image obtained from the image device, the smart RSU 210 may perform matching between the vehicle 110 who transmits the V2X message and the object detected in the image and then generate additional information on the matched object based on the matching result and the image. The generated additional information (DF_StationFeature and DF_StationShape) may be downloaded to the vehicle 110.

Thereafter, the RSU 220 may perform image processing based on the additional information included in a V2X message, and the vehicle 110 may be provided with the following services: position correction and safety based on the image processing results of the RSU 220. Additionally, the matching operation performed by the smart RSU described above may be processed by soft RSUs 210 and 220, which are terminals, and may be centrally processed by the soft V2X server 310.

Referring to FIG. 21(a), a vehicle (ITS station, VRU device, etc.) and an RSU may perform operations for the station feature generation.

Specifically, the vehicle may transmit a V2X message (CAM or BSM). The RSU may recognize the vehicle through image processing with an image device (camera, CCTV, etc.) and then transmit a CPM based on information recognized through the image processing. Upon receiving the CPM, if the vehicle requires generation of additional information on itself in accordance with the recognized information, the vehicle may request the RSU to transmit the additional information. The RSU may generate the additional information based on an object in the image, which matches to the vehicle, in response to the request and then provide the generated additional information to the vehicle. Then, the vehicle may generate a V2X message (CAM extension message or BSM extension message) based on the additional information and then transmit the generated V2X message to the RSU and/or surrounding vehicles. The RSU may check whether additional information included in the extension message is correct by comparing and verifying the additional information included in the extension message with the image of the vehicle acquired after generating the additional information.

Referring to FIG. 21(b), a vehicle (ITS station, VRU device, etc.) and an RSU may perform operations for the station feature operation. The vehicle may periodically transmit a V2X message (BSM or CAM) including additional information acquired from the station feature generation. That is, the vehicle may provide the additional information to a neighboring RSU in a V2X message. The neighboring RSU may obtain the additional information from the V2X message transmitted from the vehicle or receive the additional information on the vehicle from another RSU. The neighboring RSU may increase the performance of an image processing algorithm based on the additional information and information on the mobility of the vehicle (included in the V2X message). Thereafter, the neighboring RSU may transmit a message including the feature and/or position correction value of the vehicle based on an object that matches the vehicle according to the image processing algorithm (or transmit a CPM for the detected object). The vehicle may correct information on its position or update the additional information based on the message transmitted from the neighboring RSU.

As described above, the present disclosure proposes a V2X message including additional information because current messages generated for V2X safety do not include information to help operating with an RSU equipped with smart CCTV devices. Based on the proposed V2X message, the RSU equipped with the image device (camera, CCTV, etc.) may greatly improve the performance and speed of image processing, thereby achieving accurate ITS operation.

## Assistance in learning of RSU device

Hereinafter, methods of transmitting label information (or assistance information) and various operating methods depending on the location of a learning server will be described in order to assist AI learning based on transmission of V2X additional information.

V2X transmission may be performed through direct communication such as dedicated short-range communication (DSRC) or PC-5 or over the Uu Interface in the conventional cellular network. In addition, a method of learning separately and a method of collectively learning behind the network may be considered for AI image processing.

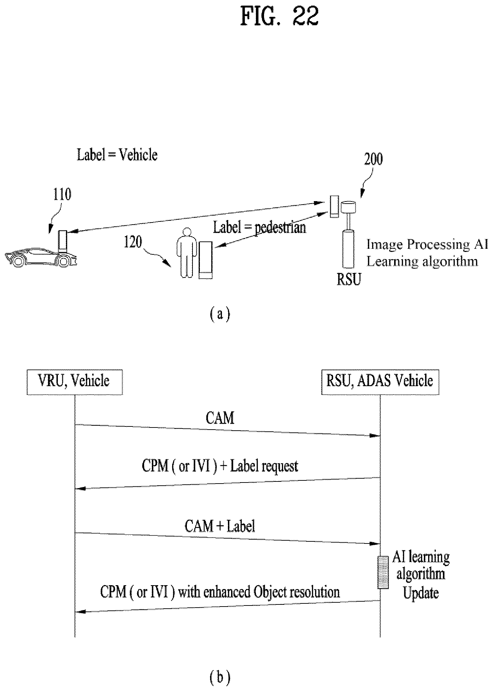

FIGS. 22 to 25 are diagrams for explaining methods for an RSU to learn based on V2X messages according to various system architectures.

Referring to FIG. 22(a), an RSU 200 that performs AI image processing may learn based on each station (vehicle 110 and pedestrian 120) and a first system architecture. The first system architecture refers to an architecture in which a device that performs image processing autonomously learns based on V2X connections through DSRC or PC-5. The device performing AI image processing may be an RSU including an image device and/or a vehicle having an ADAS device with learning functions.

Referring to FIG. 22(b), a station (VRU or vehicle) may periodically transmit a conventional V2X message (CAM or VAM). A device that performs AI image processing (or a device having learning functions such as an RSU or ADAS vehicle) may transmit a label request message to the station. In this case, the station may transmit a V2X message additionally including label information for learning.

To update a new classification algorithm, the device may learn by matching the label information included in the V2X message to the feature of an object. The device may improve the image processing algorithm based on the new classification algorithm and then provide neighboring stations with V2X services obtained from the improved image processing algorithm.

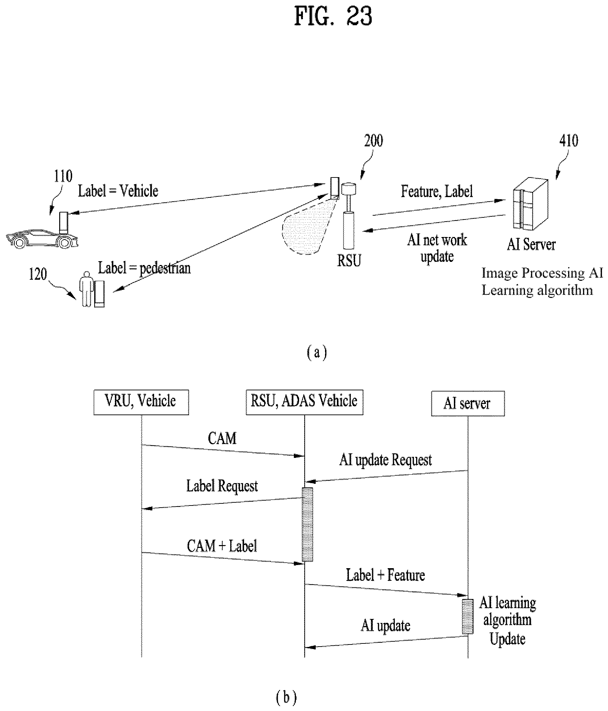

Referring to FIG. 23(a), a device may learn based on a second system architecture. The second system architecture refers to an architecture in which a device that performs image processing learns from a server 410 connected thereto through direct communication, which is based on a V2X connection.

Specifically, each station (vehicle 110 and pedestrian 120) may transmit a V2X message to an image processing device 200 through DSRC or PC-5. The image processing device 200 may forward assistance information (or label information) and preprocessing feature information included in the V2X message to the AI server 410. The AI server 410 may newly update an AI algorithm by learning based on the forwarded information and may provide the updated AI algorithm to the image processing device 200 (simply referred to as the device). The image processing device 200 may perform image processing based on the updated AI algorithm. As described above, the image processing device 200 may be an RSU or a vehicle including an ADAS device with learning functions.

Referring to FIG. 23(b), a station (VRU or vehicle) may periodically transmit a conventional V2X message (CAM or VAM). When an image processing device (RSU or ADAS vehicle) receives an AI update request message from an AI server with learning functions, the image processing device may transmit a label request message to the station. Thereafter, the station may further include label information on the station in its own message and then transmit the message. The image processing device (RSU or ADAS vehicle) may match an object to the label information and transmit the feature of the matched object to the AI server together with the label information. The AI server may learn based on the label information and the feature of the matched object and then update a new classification algorithm based on the learning. The AI server may provide the new algorithm to the image processing device.

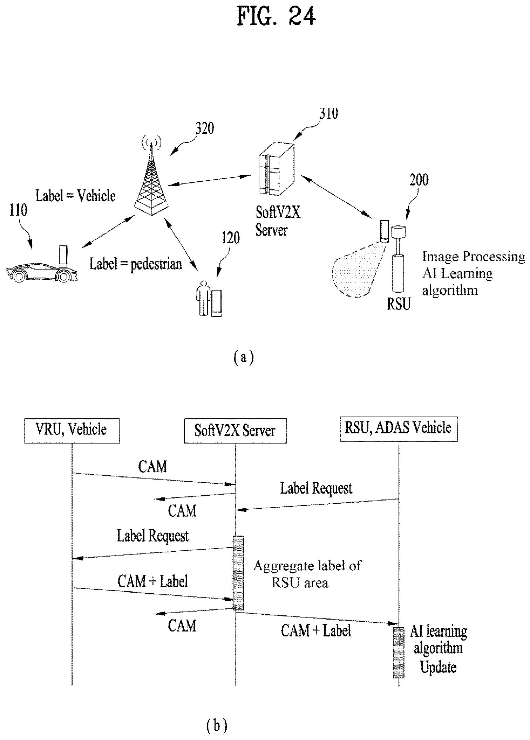

Referring to FIG. 24(a), a device may learn based on a third system architecture. The third system architecture refers to an architecture in which operations related to V2X connections are performed over the Uu interface and an image processing device autonomously learns. Specifically, in the third system architecture, each station (vehicle 110 and pedestrian 120) may perform V2X communication with an RSU 200 that performs AI image processing through a BS 320 and a soft V2X server 310 over the Uu interface. The device may be an RSU or a vehicle having an ADAS device with learning functions.

Referring to FIG. 24(b), a station (VRU or vehicle) may periodically transmit a V2X message (CAM or VAM) through the Uu interface. A soft V2X server may receive the V2X message and forward the received V2X message to neighboring stations. A device with learning functions (RSU or ADAS vehicle) may transmit a label request message requesting transmission of label information for learning to the soft V2X server. The soft V2X server may forward the label request message to the stations. The stations may transmit messages including the label information. Upon receiving the messages, the soft V2X server s may collect the label information. The soft V2X server may transmit only an original message (e.g., a conventional V2X message with no label information) to the neighboring stations, but the soft V2X server may transmit a message including the label information to the image processing device that proceeds with learning. The image processing device may match an object (i.e., object in an obtained image) to the received label information and then update a new classification algorithm by learning based on the label and feature of the matched object. Then, the image processing device may provide V2X service to the neighboring stations based on the updated classification algorithm.

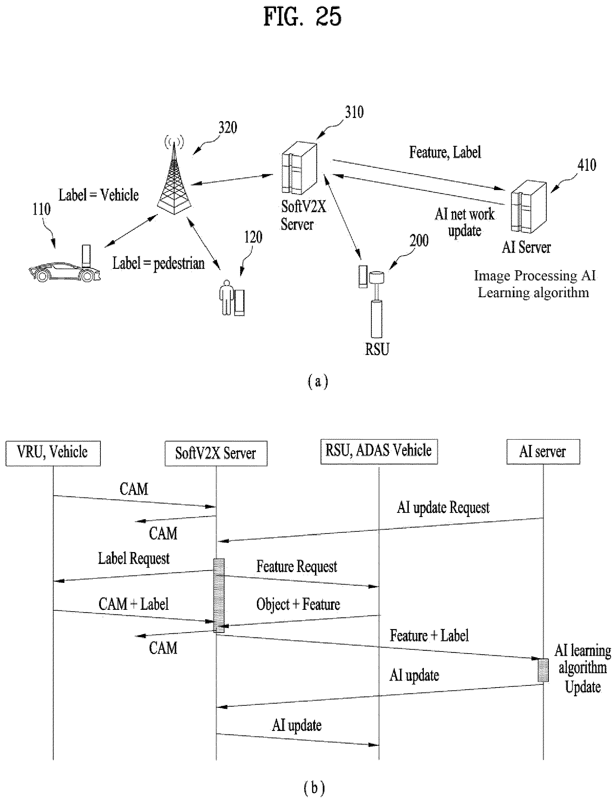

Referring to FIG. 25(a), a device may learn based on a fourth system architecture. In the fourth system architecture, the Uu interface of cellular communication may be used to establish a V2X connection and perform communication with an image processing device that performs image processing, and an AI server connected to the image processing device may learn by collecting information related to learning. Specifically, each station (vehicle 110 and pedestrian 120) may perform V2X communication with an RSU 200, which is the image processing device, through a BS 320 and a soft V2X server 310 over the Uu interface. The image processing device may be an RSU or a vehicle having an ADAS device with learning functions. The soft V2X server may assist the learning of the AI server by transmitting learning related information (feature and label) to the AI server that performs the learning.

Referring to FIG. 25(b), a station (VRU or vehicle) may periodically transmit a V2X message (CAM or VAM). A soft V2X server may transmit a message related to the V2X message to neighboring stations based on the V2X message. If an AI server with learning functions transmits a label request message to the soft V2X server, the soft V2X server may forward the label request message to the stations and transmit a feature request message to an RSU (i.e., image processing device). Then, the stations may transmit V2X messages further including label information to the soft V2X server, and the RSU may transmit object information extracted from an obtained image and feature information related to the object information to the soft V2X server. In this case, the soft V2X server may specify an object matching the label information based on the collected label information and feature information. The soft V2X server may transmit the matched object and the label information to the AI server. The AI server may learn an image processing algorithm based on information on various features and labels and then provide updated AI networks information to the RSU through the soft V2X server. Thereafter, the RSU may provide V2X services to the neighboring stations based on the improved image processing algorithm.

**Object matching and correction method**

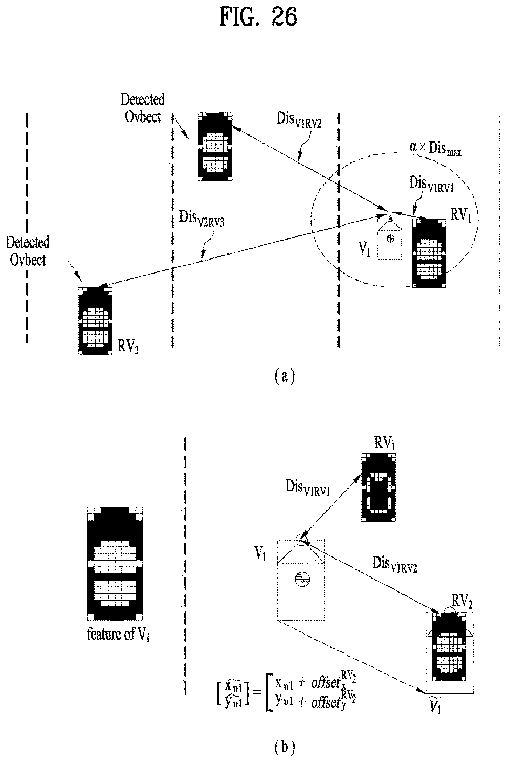

FIG. 26 is a diagram for explaining a method of matching position information on a V2X device included in a V2X message and an object in an image obtained by a camera.

For AI cognitive assistance and learning assistance, an operation of matching an object detected from a V2X device and an object detected from a camera may be required as described above. In other words, an operation of matching an object in an image in accordance with a V2X message transmitted from the V2X device may be required for the AI cognitive assistance and learning assistance. Hereinafter, a method of matching the position of a V2X device in a V2X message and the position of an object in an image will be described in detail.

Referring to FIG. 26(a), a V2X device (V1) may transmit a V2X message including information on the position of V1, and in this case, the V2X message may have an error due to GPS errors. The RSU may compare the received position information with the position of objects (RV1, RV2, and RV3) measured by itself. That is, the RSU may calculate the distance between RVs based on the received information on the position of V1. The RSU may calculate the values of Dis in ascending order as shown in Equation 1 based on the objects in the image and the position information obtained from the V2X message. Specifically, the RSU may calculate the distance between RV1 and V1, which is the shortest distance. If the calculated value is less than or equal to a specific threshold, it may be determined that the V2X vehicle is the measured vehicle.

[Equation 1]

$$if\ Dis_{V1RV1} < \alpha\ \times Dis_{max}$$

In Equation 1, $Dis_{V1RV1}$ denotes the distance between RV1 and V1, $Dis_{max}$ denotes the specific threshold, and $\alpha$ is a weight related to the position information on V1, which is determined based on GPS reliability.

Specifically, the specific threshold may be predetermined based on the reliability of camera's measurements. The weight $\alpha$ may be defined based on the reliability of GPS related to the position information on V1 in the V2X message (or received from the V2X message).

Additionally, the RSU may determine whether there are nearby objects to perform accurate object matching. To this end, the RSU may compare the minimum value, $Dis_{V1RV1}$ and the next minimum value $Dis_{V1RV2}$ as shown in Equation 2 below. If the ratio of $Dis_{V1RV2}$ to $Dis_{V1RV1}$ is smaller than a specific weight ($\beta$), the RSU may perform final object matching so that the RSU may determine that an object corresponding to V1 is RV1.

$$if\ \beta \times Dis_{V1RV1} < Dis_{V1RV2}$$

Additionally, the RSU may calculate a value for correcting the position information on the V2X device (i.e., position information on V1) based on the matching result. That is, the location of V1 obtained from the GPS may include an error due to the reliability of the GPS device, etc. The error may be corrected by the RSU (or ground station).

Alternatively, the RSU may perform object matching and position correction based on additional information included in a V2X message. Referring to FIG. 26(b), the RSU may match an object corresponding to V1 in an image based on information on the feature of V1 (i.e., obtained from assistance information) and then correct information on the position of V1 as described above. The vehicle V1 may be expressed in the form of a vehicle with a red sunroof as shown in the left bitmap of FIG. 26(b). When the vehicle V1 drives under the image device (or CCTV) of the RSU, the RSU may extract object information (position, feature, etc.) on objects (RV1 and RV2) from the image obtained by the RSU.

In this case, the vehicle, V1 may be estimated close to the vehicle, RV1 due to location errors. When object matching is performed only according to Equations 1 and 2 above, RV1 may match the object corresponding to V1. However, the RSU may additionally use assistance information on the feature (e.g., appearance) of V1 in order to perform the object matching as described above, and thus, the RSU may specify or match RV2 as the object in accordance with the feature of V1 based on the assistance information. In this case, the RSU may calculate a value for correcting the position of V1 based on the position of V1 and the position of RV1 according to the equation shown in FIG. 26(b).

In this way, when performing image processing on V2X information collected from an image device (camera, CCTV, etc.), an RSU may additionally use assistance information in order to accurately match an object in an image with a vehicle that has transmitted a V2X message. Then, the RSU may accurately correct errors in information on the position of the vehicle according to the matching result. In addition, the RSU or image processing device may achieve accurate image processing based on the assistance information. The above-described method (i.e., method of transmitting information useful for image processing such as a CCTV in a V2X message) may not only improve the performance of image processing but also greatly increase the speed of the image processing.

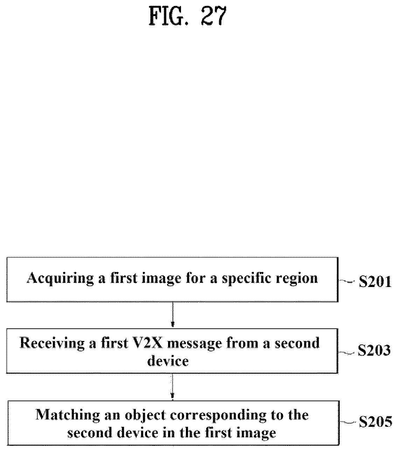

FIG. 27 is a diagram for explaining a method by which a first device configured to learn performs image processing based on a first V2X message.

In this case, the image processing method may include the methods of performing image processing based on V2X messages as described above with reference to FIGS. 11 to 26.

Referring to FIG. 27, the first device may obtain a first image of a specific area (e.g., capturing area, sensing area, etc.) from an image device such as a camera or CCTV included in the first device (S201). The specific area may be a road on which the first device is installed or an area adjacent to the road. That is, the first device may obtain images of vehicles or VRU devices on the road or in the specific area adjacent to the road. In this case, the first device may be an RSU attached to traffic lights or road facilities or a vehicle including an ADAS device.

Alternatively, the first device may specify objects corresponding to the vehicles or VRU devices from the first image or extract features from the images of the objects. The first device may detect or track the movements of the vehicles and VRU devices on and around the road based on the specified objects and/or the extracted features.

Next, the first device may receive the first V2X message from the second device (S203). The second device may be a vehicle and/or VRU device that performs V2X communication. The second device may periodically transmit the first V2X message. The first V2X message may include information on the position and/or mobility of the second device as in the prior art. In addition, the first V2X message may be a cooperative awareness message (CAM), a vulnerable road user awareness message (VAM), a collective perception message (CPM), a basic safety message (BSM), or a pedestrian safety message (PSM).

As described above in FIGS. 11 to 26, the first V2X message may further include additional information for assisting image processing of the first device. The additional information may include information on the feature (e.g., appearance, etc.) of the second device that helps the first device identify the second device in the first image, which is obtained from the image device. The feature information may be information on the shape, form, color, material, attachment (e.g., roof), movement pattern, driving mode, and so on of the second device. Alternatively, the feature information may be information on the appearance (e.g., shape, form, color, material, and attachment), movement pattern, and/or driving mode of the second device, which are observed in a specific direction. For example, the feature information may be information on the appearance, movement pattern, and driving mode of the second device observed from the top of the second device. Alternatively, the additional information may be included in AISupportContainer of the first V2X message.

Alternatively, the additional information may include 2D preprocessing image information (preprocessing image information required for AI-based image processing, for example, a bitmap) that indicates the feature of the second device such as the appearance. As described with reference to FIGS. 15 and 16, the 2D preprocessing image information may indicate information on the feature of the second device.

Next, the first device may match an object corresponding to the second device in the first image based on the additional information included in the first V2X message (S205). Specifically, the first device may compare the feature of the second device included in the additional information with the features of objects extracted from a second image and then match an object with the same feature as the second device among the objects.

For example, the first device may extract the features of the objects in the form of a bitmap as described above in FIGS. 15 and 16 by preprocessing the first image. The first device may compare the extracted object features with the feature included in the additional information and then match an object having a feature similar to that (i.e., the appearance feature of the second device displayed on the bitmap included in the additional information) included in the additional information to the second device.

The first device may calculate a value for correcting the position of the second device based on the matching result. The first device may specify the object corresponding to the second device based on the matching. The first device may calculate the correction value for correcting the position of the second device by comparing the position of the specified object with the position information included in the first V2X message. The correction value may be calculated as described above with reference to FIG. 26. The first device may transmit a message including the calculated correction value to the second device, and the second device may adjust the estimated position by correcting its own GPS based on the correction value included in the message.

Alternatively, the first device may determine whether there are differences between the first feature of the second device according to the additional information and the second feature of the object matched based on the additional information. If there are differences between the first feature and the second feature, the first device may obtain information for correcting the differences, transmit the obtained correction information to the second device, and request the second device to correct or update the additional information.

Alternatively, the first device may learn as described above with reference to FIG. 13 and FIGS. 22 to 25.

Specifically, the first device may transmit a label request message to request neighboring vehicles or VRUs (hereinafter referred to as a third device) to transmit a second V2X message including label information for supervised learning. The first device may receive the second V2X message including label information on a vehicle or VRU transmitting the second V2X message from the vehicle or VRU. In addition, the first device may obtain the second image related to the third device transmitting the second V2X message. The first device may obtain the label information included in the second V2X message. For example, the first device may learn a classification model based on the label information and the feature of an object corresponding to the third device in the second image.

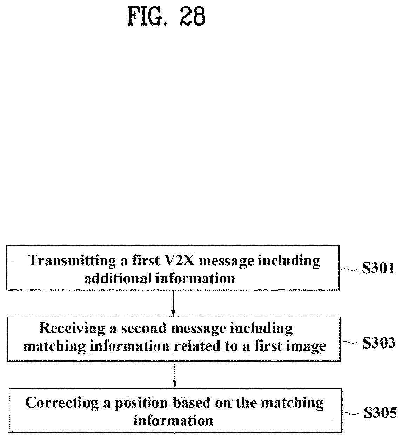

FIG. 28 is a diagram for explaining a method by which a second device transmits a first V2X message for assisting image processing.

In this case, the method of transmitting the first V2X message may be the methods of transmitting the first V2X message including assistance information and additional information as described above in FIGS. 11 to 26. As described in FIGS. 11 to 26, the second device may perform position correction or update additional information.

Referring to FIG. 28, the second device may transmit the first V2X message to a first device. (S301).The second device may be a vehicle and/or VRU device that performs V2X communication. The second device may periodically transmit the first V2X message. The first V2X message may include information on the position and/or mobility of the second device as in the prior art. In addition, the first V2X message may be a CAM, a VAM, a CPM, a BSM, or a PSM.

As described above in FIGS. 11 to 26, the first V2X message may further include additional information for assisting image processing of the first device. The additional information may include information on the feature of the second device that helps the first device identify the second device in a first image, which is obtained from an image device. The feature information may be information on the shape, form, color, material, attachment (e.g., roof), movement pattern, driving mode, and so on of the second device.

Alternatively, the feature information may be information on the appearance (e.g., shape, form, color, material, and attachment), movement pattern, and/or driving mode of the second device, which are observed in a specific direction. For example, the feature information may be feature information (appearance information observed in a direction from the image device of the image device) observed from the top of the second device. Alternatively, the additional information may be included in AISupportContainer of the first V2X message.

Alternatively, the additional information may include a bitmap for representing the feature of the second device such as the appearance. As described above with reference to FIGS. 15 and 16, the bitmap may display information on the feature of the second device.

Next, the second device may receive a message including matching information based on image processing from the first device (S303). The matching information may include a position correction value calculated based on an object matched with the second device, which is extracted from the first image, and correction information for updating the additional information.

Specifically, the first device may specify objects corresponding to vehicles or VRU devices from the first image or extract features from the images of the objects. The first device may detect or track the movements of the vehicles and VRU devices on and around a road based on the specified objects and/or the extracted features. In this case, to obtain the matching information, the first device may match an object corresponding to the second device in the first image based on the additional information included in the first V2X message. For example, the first device may compare the feature (and/or appearance) of the second device included in the additional information with the features of objects extracted from a second image and then match an object with the same feature as the second device among the objects. For example, the first device may extract the features of the objects in the form of 2D preprocessing image information as described above in FIGS. 15 and 16 by preprocessing the first image. The first device may compare the extracted object features with the feature included in the additional information and then match an object having a feature similar to that (i.e., the appearance feature of the second device displayed on the bitmap included in the additional information) included in the additional information to the second device.

Alternatively, the position correction value may be calculated by the first device based on the location of the object matched with the second device in the first image and the position information included in the first V2X message. The position correction value (or correction value) may be calculated as described above with reference to FIG. 26.

The second device may adjust the estimated location by correcting its own GPS based on the correction value included in the message (S305). That is, the first device may be attached to a fixed position. The first device may estimate the absolute location of the object in the first image with great accuracy and calculate the position correction value based on the accurately estimated object position. In this case, the second device may receive the position correction value calculated by the first device based on the absolute location. The second device may correct its own GPS e based on the position correction value.

Alternatively, correction information included in the matching information may be information on differences between the first feature of the second device based on the additional information and the second feature of the object matched based on the additional information. If there are differences between the first feature and the second feature based on the correction information, the first device may obtain information for correcting the differences, transmit the obtained correction information to the second device, and request the second device to correct or update the additional information.

Alternatively, the second device may receive a label request message from the first device. The second device may transmit a second V2X message including label information on the second device (i.e., information on the type, kind, feature, and so on of the second device in a classification algorithm for supervised learning) to the first device based on the reception of the label request message.

Hereinafter, the first device configured to perform image processing or learning based on V2X messages and the second device configured to transmit the first V2X message including assistance information and/or additional information and the second V2X message will be described

## Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

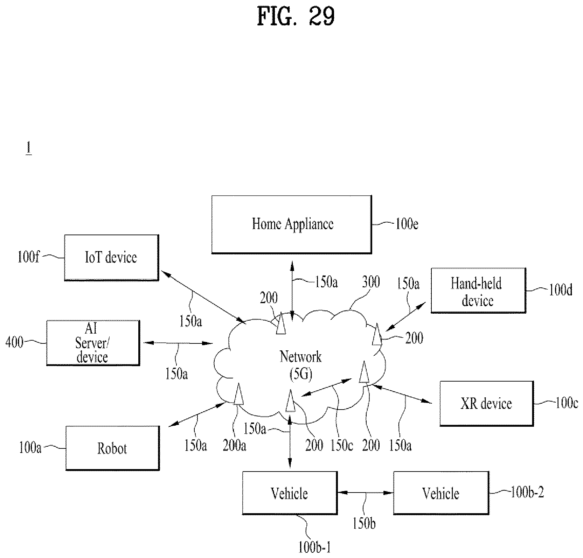

FIG. 29 illustrates a communication system applied to the present disclosure.

Referring to FIG. 29, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

## Examples of wireless devices to which the present disclosure is applied

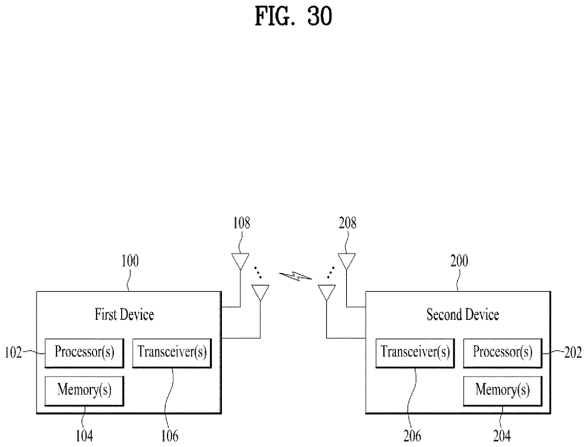

FIG. 30 illustrates a wireless device applicable to the present disclosure.

Referring to FIG. 30, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 29.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, the first wireless device 100 may be a first device corresponding to an RSU equipped with a V2X communication module. The first wireless device 100 may include the processor(s) 102 connected to an RF transceiver and the memory(s) 104. The memory(s) 104 may include at least one program for performing operations related to the embodiments described above with reference to FIGS. 11 to 28.

The processor(s) 102 may be configured to: obtain a first image of a specific area; control the transceiver(s) 106 to receive a first V2X message related to the specific area; and match an object corresponding to a second device on the first image based on the first V2X message, where the first V2X message is transmitted by the second device. The first V2X message may include additional information on a feature of the second device for matching the second device on the first image. The processor(s) 102 may perform the operations related to image processing described above with reference to FIGS. 11 to 28 based on the program included in the memory(s) 104.

Alternatively, a chipset including the processor(s) 102 and memory(s) 104 may be configured. The chipset may include: at least one processor; and at least one memory operably connected to the at least one processor and configured to, when executed, cause the at least one processor to perform operations. The operations may include: obtaining a first image of a specific area; receiving a first V2X message related to the specific area; and matching an object corresponding to a second device on the first image based on the first V2X message, wherein the first V2X message is transmitted by the second device. The first V2X message may include additional information on a feature of the second device for matching the second device on the first image. The processor(s) 102 may perform the operations related to image processing described above with reference to FIGS. 11 to 28 based on the program included in the memory(s) 104.

Alternatively, there is provided a computer-readable storage medium including at least one computer program configured to perform image processing based on received V2X messages in a wireless communication system. The at least one computer program may be configured to cause at least one processor to perform operations for the image processing, and the at least one computer program may be stored on the computer-readable storage medium. The operations may include: obtaining a first image of a specific area; receiving a first V2X message related to the specific area; and matching an object corresponding to a second device on the first image based on the first V2X message, wherein the first V2X message is transmitted by the second device. The first V2X message may include additional information on a feature of the second device for matching the second device on the first image.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Specifically, the second wireless device 200 may be a second device corresponding to an RSU device, a vehicle, and/or a V2X device. The second wireless device 100 may include the processor(s) 202 connected to an RF transceiver and the memory(s) 204. The memory(s) 204 may include at least one program for performing operations related to the embodiments described above with reference to FIGS. 11 to 28.

The processor(s) 202 may be configured to control the RF transceiver to: transmit a first message including additional information related to image processing to a first device; and receive a second message including matching information based on the image processing from the first device. The additional information may include information on a feature of the second device for matching the second device on a first image obtained by the first device, and the matching information may include a correction value for correcting a position of the second device.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

## Examples of wireless devices to which the present disclosure is applied

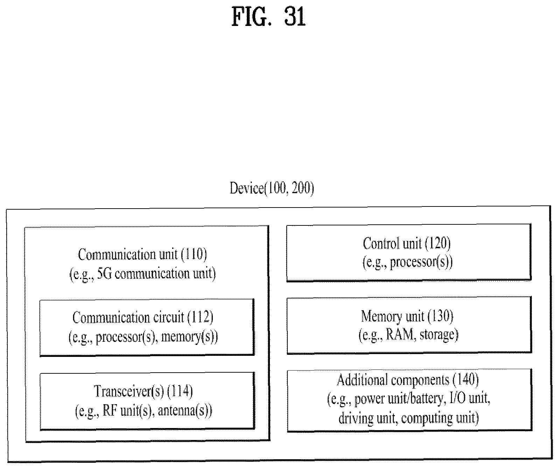

FIG. 31 illustrates another example of a wireless device applied to the present disclosure. The wireless device may be implemented in various forms according to a use-case/service (refer to FIG. 29)

Referring to FIG. 31, wireless devices 100 and 200 may correspond to the wireless devices 100 and 200 of FIG. 30 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 30. For example, the transceiver(s) 114 may include the one or more transceivers 106 and 206 and/or the one or more antennas 108 and 208 of FIG. 30. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 29), the vehicles (100b-1 and 100b-2 of FIG. 29), the XR device (100c of FIG. 29), the hand-held device (100d of FIG. 29), the home appliance (100e of FIG. 29), the IoT device (100f of FIG. 29), a digital broadcast terminal, a hologram device, a public safety device, an MTC device, a medicine device, a fintech device (or a finance device), a security device, a climate/environment device, the AI server/device (400 of FIG. 29), the BSs (200 of FIG. 29), a network node, etc. The wireless device may be used in a mobile or fixed place according to a use-example/service.

In FIG. 31, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

## Examples of vehicles or autonomous vehicles to which the present disclosure is applied

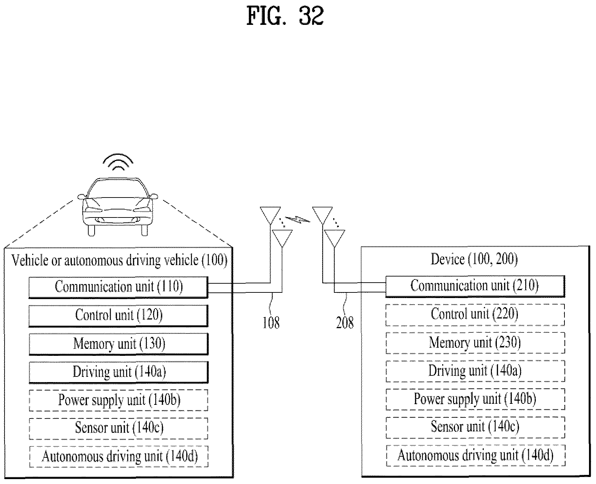

FIG. 32 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 32, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 31, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network including a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), and Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

The above-described embodiments of the present disclosure are applicable to various mobile communication systems.

**Claims**

1. A method of performing, by a first device configured to learn, image processing based on received vehicle-to-everything (V2X) messages in a wireless communication system, the method comprising:

   obtaining a first image of a specific area;
   receiving a first V2X message related to the specific area; and
   matching an object corresponding to a second device on the first image based on the first V2X message, wherein the first V2X message is transmitted by the second device,
   wherein the first V2X message comprises additional information on a feature of the second device for matching the second device on the first image.

2. The method of claim 1, wherein the additional information comprises information on at least one of a shape, a color, a material, a movement pattern, a driving mode, or an attachment of the second device, and
   wherein the additional information is included in AISupportContainer of the first V2X message.

3. The method of claim 1, wherein the additional information comprises two-dimensional (2D) preprocessing image information for indicating at least one of a shape, a color, a material, a movement pattern, a driving mode, or an attachment of the second device.

4. The method of claim 1, wherein the first device is configured to:

   specify the object matching the second device among a plurality of objects identified in the first image based on the additional information; and
   calculate a correction value for correcting a position of the second device based on a position of the specified object and the position of the second device included in the first V2X message.

5. The method of claim 4, wherein the first device is configured to transmit a message comprising the correction value to the second device.

6. The method of claim 4, wherein based on that there is difference between a feature of the specified object and the feature of the second device in the additional information, the first device is configured to transmit a message for updating the additional information to the second device.

7. The method of claim 1, further comprising receiving a second V2X message comprising label information for supervised learning.

8. The method of claim 7, wherein the first device is configured to learn based on a second image related to a third device transmitting the second V2X message and the label information.

9. The method of claim 7, wherein the label information provides information on a type of the third device.

10. The method of claim 1, wherein the first V2X message is any one of a cooperative awareness message (CAM), a vulnerable road user awareness message (VAM), a collective perception message (CPM), a basic safety message (BSM), and a pedestrian safety message (PSM).

11. A method of transmitting, by a second device, a first message comprising additional information in a wireless communication system, the method comprising:

    transmitting the first message comprising the additional information related to image processing to a first device; and
    receiving a second message comprising matching information based on the image processing from the first device,
    wherein the additional information comprises information on a feature of the second device for matching the second device on a first image obtained by the first device, and
    wherein the matching information comprises a correction value for correcting a position of the second device.

12. A first device configured to learn and perform image processing based on received vehicle-to-everything (V2X) messages in a wireless communication system, the first device comprising:

    a radio frequency (RF) transceiver; and
    a processor connected to the RF transceiver,
    wherein the processor is configured to:

        obtain a first image of a specific area;
        control the RF transceiver to receive a first V2X message related to the specific area; and
        match an object corresponding to a second device on the first image based on the first V2X message,
        wherein the first V2X message is transmitted by the second device, and
        wherein the first V2X message comprises additional information on a feature of the second device for matching the second device on the first image.

13. A second device configured to transmit a first message comprising additional information in a wireless communication system, the second device comprising:

    a radio frequency (RF) transceiver; and
    a processor connected to the RF transceiver,
    wherein the processor is configured to control the RF transceiver to:

        transmit the first message comprising the additional information related to image processing to a first device; and
        receive a second message comprising matching information based on the image processing from the first device,
        wherein the additional information comprises information on a feature of the second device for matching the second device on a first image obtained by the first device, and
        wherein the matching information comprises a correction value for correcting a position of the second device.

14. A chipset configured to learn and perform image processing based on received vehicle-to-everything (V2X) messages in a wireless communication system, the chipset comprising:

    at least one processor; and
    at least one memory operably connected to the at least one processor and configured to, when executed, cause the at least one processor to perform operations comprising:

obtaining a first image of a specific area;

receiving a first V2X message related to the specific area; and

matching an object corresponding to a second device on the first image based on the first V2X message, wherein the first V2X message is transmitted by the second device,

wherein the first V2X message comprises additional information on a feature of the second device for matching the second device on the first image.

15. A computer-readable storage medium comprising at least one computer program configured to perform image processing based on received vehicle-to-everything (V2X) messages in a wireless communication system,

wherein the at least one computer program is configured to cause at least one processor to perform operations for the image processing,

wherein the at least one computer program is stored on the computer-readable storage medium,

wherein the operations comprise:

obtaining a first image of a specific area;

receiving a first V2X message related to the specific area; and

matching an object corresponding to a second device on the first image based on the first V2X message, wherein the first V2X message is transmitted by the second device,

wherein the first V2X message comprises additional information on a feature of the second device for matching the second device on the first image.

FIG. 1

Evolution to 5G, while maintaining backward compatibility

Advanced use cases
5G V2X R16

Basic safety
802.11p or C-V2X R14

Enhanced safety
C-V2X R14/15

Enhanced range and reliability

Higher throughput
Higher reliability

Wideband raging
and positioning
Lower latency

| Vehicle Platooning | Extended Sensors |
|---|---|
| Remote Driving | Advanced Driving |

# FIG. 2

# FIG. 3

# FIG. 4

# FIG. 5

# FIG. 6

PU5-U

(a)

PU5-U

(b)

# FIG. 7

BS (e.g. eNB or gNB)

UE1          UE2

# FIG. 8

# FIG. 9

# FIG. 10

C-V@X (LTE-V2X) in EU

| Applications | | |
|---|---|---|
| Management | Facilities<br>Requirements & Profile (ETSI EN 302 637, ...)<br>Message Dictionary (ETSI EN 102 894-2)<br><br>BTP (ETSI EN 302 636-5) / UDP/TCP/others<br>GeiNetworking (ETSI EN 302 636-4) / IPv6 | Security (ETSI TS 102 940, ...) |

ProSe Signaling | NON-IP | PDCP | RLC
MAC
PHY

C-V@X (LTE-V2X) in US

| Applications | | |
|---|---|---|
| Management | Facilities<br>Requirements & Profile (SAE J3161, ...)<br>Message Dictionary (SAE J2735)<br><br>WSMP (IEEE 1609.3) / UDP/TCP/others / IPv6 | Security (IEEE 1609.2) |

ProSe Signaling | NON-IP | PDCP | RLC
MAC
PHY

FIG. 11

# FIG. 12

(a)

(b)

# FIG. 13

# FIG. 14

| BSM |
| --- |

| BSM mandatory | BSM optional | Regional Extension (AISupportContainer) |
| --- | --- | --- |

| StationFeature | StationShape | AI learningAssistance Container |
| --- | --- | --- |

(a)

| SoftV2X message |
| --- |

| SoftV2X Header | Ectension field | BSM |
| --- | --- | --- |

| (AISupportContainer) | BSM mandatory | BSM optional |
| --- | --- | --- |

| StationFeature | StationShape | AI learningAssistance Container |
| --- | --- | --- |

(b)

# FIG. 15

Feature [1,8] = None, None     Feature [5,8] = red, body     Feature [10,7] = White, Class

yUnit

xUnit

( IndexX, IndexY ) = [1,1]     ( IndexX, IndexY ) = [7,1]

## FIG. 16

Feature [1,8] = None, None    Feature [5,8] = red, metal    Feature [10,7] = White, Class

2400 cm

yUnit = 30 cm

xUnit = 20cm

( IndexX, IndexY ) = [1,1]    ( IndexX, IndexY ) = [7,1]

3400 cm

# FIG. 17

| AI learning Assisttance Contatiner | |
|---|---|
| Header | Payload |

Type 1: non Payload — | Header |

Type 2: Lable Payload — | Header | Label |

Type 3: Feature Payload — | Header | Feature |

Type 4: URL Payload — | Header | URL |

Type 5: AI Payload — | Header | AI network dat |

# FIG. 18

# FIG. 19

[ Station Feature Generation ]

(a)

[ Station Featrue Operation ]

(b)

EP 4 242 938 A1

# FIG. 20

# FIG. 21

[ Station Feature Generation ]

(a)

[ Station Featrue Operation ]

(b)

EP 4 242 938 A1

# FIG. 22

Label = Vehicle

110    200

Label = pedestrian

120    Image Processing AI
Learning algorithm

RSU

(a)

| VRU, Vehicle | | RSU, ADAS Vehicle |
|---|---|---|

CAM

CPM ( or IVI ) + Label request

CAM + Label

AI learning
algorithm
Update

CPM ( or IVI ) with enhanced Object resolution

(b)

# FIG. 23

(a)

(b)

# FIG. 24

Label = Vehicle

310

320

200

SoftV2X
Server

110

120

Label = pedestrian

Image Processing
AI Learning
algorithm

RSU

(a)

| VRU, Vehicle | SoftV2X Server | RSU, ADAS Vehicle |

CAM

Label Request

CAM

Label Request

Aggregate label of
RSU area

CAM + Label

CAM

CAM + Label

AI learning
algorithm
Update

(b)

# FIG. 25

(a)

(b)

# FIG. 26

Detected
Ovbect

$Dis_{V1RV2}$

$\alpha \times Dis_{max}$

$Dis_{V1RV1}$

$RV_1$

$Dis_{V2RV3}$

$V_1$

Detected
Ovbect

$RV_3$

(a)

$RV_1$

$Dis_{V1RV1}$

$V_1$

$Dis_{V1RV2}$

$RV_2$

feature of $V_1$

$$\begin{bmatrix} \widetilde{x_{v1}} \\ \widetilde{y_{v1}} \end{bmatrix} = \begin{bmatrix} x_{v1} + offset_x^{RV_2} \\ y_{v1} + offset_y^{RV_2} \end{bmatrix}$$

$\widetilde{V_1}$

(b)

FIG. 27

| Acquiring a first image for a specific region | ~ S201 |

| Receiving a first V2X message from a second device | ~ S203 |

| Matching an object corresponding to the second device in the first image | ~ S205 |

# FIG. 28

| Transmitting a first V2X message including additional information | ~ S301 |

↓

| Receiving a second message including matching information related to a first image | ~ S303 |

↓

| Correcting a position based on the matching information | ~ S305 |

# FIG. 29

<u>1</u>

# FIG. 30

# FIG. 31

Device(100, 200)

| Communication unit (110)<br>(e.g., 5G communication unit) | Control unit (120)<br>(e.g., processor(s)) |
| --- | --- |
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 32

| Vehicle or autonomous driving vehicle (100) |
| --- |
| Communication unit (110) |
| Control unit (120) |
| Memory unit (130) |
| Driving unit (140a) |
| Power supply unit (140b) |
| Sensor unit (140c) |
| Autonomous driving unit (140d) |

108    208

| Device (100, 200) |
| --- |
| Communication unit (210) |
| Control unit (220) |
| Memory unit (230) |
| Driving unit (140a) |
| Power supply unit (140b) |
| Sensor unit (140c) |
| Autonomous driving unit (140d) |

## INTERNATIONAL SEARCH REPORT

| International application No. |
| --- |
| **PCT/KR2021/016029** |

| | |
| --- | --- |
| **A.    CLASSIFICATION OF SUBJECT MATTER** | |

**G06N 20/00**(2019.01)i; **H04W 4/40**(2018.01)i; **H04W 4/02**(2009.01)i; **H04L 9/40**(2022.01)i

According to International Patent Classification (IPC) or to both national classification and IPC

**B.    FIELDS SEARCHED**

Minimum documentation searched (classification system followed by classification symbols)

G06N 20/00(2019.01); G06K 9/00(2006.01); G06N 3/04(2006.01); G06N 3/08(2006.01); G06T 17/05(2011.01); H04W 4/02(2009.01); H04W 4/06(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: V2X, 학습(learning), 영상(image), 객체(object), 전처리(preprocessing), 지도 학습 (supervised learning), 라벨(label)

**C.    DOCUMENTS CONSIDERED TO BE RELEVANT**

| Category* | Citation of document, with indication, where appropriate, of the relevant passages | Relevant to claim No. |
| --- | --- | --- |
| X | KR 10-2020-0063320 A (HYUNDAI MOTOR COMPANY et al.) 05 June 2020 (2020-06-05)<br>See paragraphs [0039]-[0040], [0044]-[0047], [0063]-[0064], [0092]-[0093] and [0096]; and claims 12-15. | 1-6,10-15 |
| Y | | 7-9 |
| Y | US 2017-0140273 A1 (VIDEO INFORM LTD.) 18 May 2017 (2017-05-18)<br>See paragraph [0003]; and claim 3. | 7-9 |
| A | KR 10-2018-0065196 A (ELECTRONICS AND TELECOMMUNICATIONS RESEARCH INSTITUTE) 18 June 2018 (2018-06-18)<br>See paragraphs [0070]-[0078]. | 1-15 |
| A | KR 10-2018-0062058 A (HYUNDAI MOTOR COMPANY) 08 June 2018 (2018-06-08)<br>See paragraphs [0057]-[0077]. | 1-15 |

☑ Further documents are listed in the continuation of Box C.      ☑ See patent family annex.

| | |
| --- | --- |
| \*    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **18 February 2022** | **21 February 2022** |

| Name and mailing address of the ISA/KR | Authorized officer |
| --- | --- |
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
| --- |
| **PCT/KR2021/016029** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2020-0077004 A (KOREA ELECTRONICS TECHNOLOGY INSTITUTE) 30 June 2020 (2020-06-30)<br>    See paragraphs [0026]-[0040]. | 1-15 |

Form PCT/ISA/210 (second sheet) (July 2019)

**INTERNATIONAL SEARCH REPORT**
**Information on patent family members**

International application No.

**PCT/KR2021/016029**

| Patent document cited in search report | | | Publication date (day/month/year) | Patent family member(s) | | | Publication date (day/month/year) |
|---|---|---|---|---|---|---|---|
| KR | 10-2020-0063320 | A | 05 June 2020 | US | 10963711 | B2 | 30 March 2021 |
| | | | | US | 2020-0160073 | A1 | 21 May 2020 |
| US | 2017-0140273 | A1 | 18 May 2017 | None | | | |
| KR | 10-2018-0065196 | A | 18 June 2018 | None | | | |
| KR | 10-2018-0062058 | A | 08 June 2018 | CN | 108122425 | A | 05 June 2018 |
| | | | | CN | 108122425 | B | 27 July 2021 |
| | | | | US | 10535265 | B2 | 14 January 2020 |
| | | | | US | 2018-0151071 | A1 | 31 May 2018 |
| KR | 10-2020-0077004 | A | 30 June 2020 | None | | | |

Form PCT/ISA/210 (patent family annex) (July 2019)